# EUROPÄISCHE PATENTSCHRIFT

(11) **EP 4 122 084 B1**
(45) Veröffentlichungstag und Bekanntmachung des Hinweises auf die Patenterteilung: **26.07.2023**
(21) Anmeldenummer: 21720735.6
(22) Anmeldetag: 21.04.2021
(51) Int. Cl.: H02K 7/18, H02K 41/03, H02J 50/10, B60L 5/00

(54) **ANSCHALTEINHEIT IN EINEM LINEAREN TRANSPORTSYSTEM**
SWITCH-ON UNIT IN A LINEAR TRANSPORT SYSTEM
UNITÉ DE DÉMARRAGE DANS UN SYSTÈME DE TRANSPORT LINÉAIRE

(30) Priorität: 21.04.2020 DE 102020110795
(43) Veröffentlichungstag der Anmeldung: 25.01.2023
(73) Patentinhaber: Beckhoff Automation GmbH, 33415 Verl (DE)
(72) Erfinder: ACHTERBERG, Jan, 47249 Duisburg (DE); BRINKER, Andreas, 49082 Osnabrück (DE); BETTENWORTH, Manuel, 33335 Gütersloh (DE); VORBOHLE, Thomas, 33397 Rietberg (DE)
(74) Vertreter: Patentanwaltskanzlei WILHELM & BECK
(86) Internationale Anmeldenummer: PCT/EP2021/060348
(87) Internationale Veröffentlichungsnummer: WO 2021/214124

(56) Entgegenhaltungen:
- US-A- 5 927 657
- US-A1- 2013 084 157
- US-A1- 2016 090 275
- US-A1- 2019 047 799
- US-A1- 2019 097 466

## Beschreibung

Die Erfindung betrifft eine Anschalteinheit für ein Werkzeug einer beweglichen Einheit eines linearen Transportsystems, eine bewegliche Einheit und ein lineares Transportsystem.

Diese Patentanmeldung beansprucht die Priorität der deutschen Patentanmeldung DE 10 2020 110 795.1, deren Offenbarungsgehalt hiermit durch Rückbezug aufgenommen wird.

Aus dem Stand der Technik sind lineare Transportsysteme bekannt. Die deutsche Patentanmeldung DE 10 2018 111 715 A1 offenbart ein lineares Transportsystem, in dem Energie und Daten zwischen stationären Einheiten und beweglichen Einheiten ausgetauscht werden, wobei ein Werkzeug an der beweglichen Einheit angeordnet ist und das Werkzeug mit Energie versorgt und anhand der Daten gesteuert werden kann.

Die Druckschrift US 2019 / 047 799 A1 offenbart eine Anschalteinheit für ein Werkzeug eines linearen Transportsystems, die eingerichtet ist, Daten und Energie zu empfangen und dem Werkzeug bereitzustellen.

Die Druckschrift US 2019 / 097 466 A1 offenbart einen Schiebetransformator, mit dem ebenfalls Energie auf einen Läufer übertragen werden kann.

Die Druckschrift US 2013 / 084 157 A1 offenbart ein lineares Transportsystem, das in einem Vakuum angeordnet werden kann.

Die Druckschrift US 5,927,657 A offenbart eine Antenne für eine bewegliche Einheit eines Transportsystems.

Die Druckschrift US 2016 / 090 275 A1 offenbart eine drahtlose Energieversorgung für eine bewegliche Einheit eines Transportsystems.

Eine Aufgabe der vorliegenden Erfindung ist es, eine effiziente Ansteuerung und/oder Verbindungstechnik für ein Werkzeug in einem solchen linearen Transportsystem zur Verfügung zu stellen. Weitere Aufgaben sind, eine bewegliche Einheit und ein lineares Transportsystem zur Verfügung zu stellen, bei denen eine effiziente Ansteuerung für ein Werkzeug möglich ist.

Diese Aufgaben werden durch die Anschalteinheit, die bewegliche Einheit und das lineare Transportsystem der unabhängigen Patentansprüche gelöst. Vorteilhafte Weiterbildungen sind in den abhängigen Patentansprüchen angegeben.

Eine Anschalteinheit für ein Werkzeug einer beweglichen Einheit eines linearen Transportsystems ist an der beweglichen Einheit befestigbar und weist ein Gehäuse, eine Energieempfangsspule mit einer Energieempfangselektronik sowie eine bewegliche Antenne mit einer Kommunikationselektronik auf. Die Energieempfangselektronik und die Kommunikationselektronik sind auf zumindest einer ersten Platine innerhalb des Gehäuses angeordnet. Das Gehäuse weist zumindest eine Öffnung für Anschlüsse des Werkzeugs und einen Bauraum für eine Anwendungselektronik auf. Die zumindest eine erste Platine weist eine erste Schnittstelle für die Anwendungselektronik mit einer Spannungsversorgung und einer Kommunikationsverbindung auf. Die Kommunikationselektronik ist eingerichtet, ein erstes Datensignal über die bewegliche Antenne zu empfangen, aus einer Information über eine Datenstruktur des ersten Datensignals und dem ersten Datensignal ein zweites Datensignal zu berechnen und das zweite Datensignal an der Kommunikationsverbindung zur Verfügung zu stellen.

Die Anschalteinheit weist einen Speicher auf. Der Speicher ist groß genug um eine Firmware der Anschalteinheit zu speichern. Ferner ist die Anschalteinheit eingerichtet, ein Datenpaket zu empfangen, wobei die Anschalteinheit eingerichtet ist, bei Empfang des Datenpakets eine Firmwareaktualisierung der Anschalteinheit durchzuführen. Damit der Speicher groß genug ist, kann vorgesehen sein, dass eine Speicherkapazität typischerweise mindestens 64 und maximal 1024 Kilobyte beträgt, es sind jedoch auch andere Speicherkapazitäten denkbar. Dies gilt insbesondere für Speicher, die als Flash-Speicher ausgestaltet sind. Ein EPROM kann auch eine Speicherkapazität zwischen 2 und 4 Megabyte aufweisen. Insbesondere können also Speicher mit einer Speicherkapazität zwischen 64 Kilobyte und 4 Megabyte groß genug sein.

Eine Recheneinheit der Anschalteinheit beinhaltet für die Durchführung der Firmwareaktualisierung einen speziellen Bootloader, wobei der Bootloader in der Lage ist, die Firmware aus dem Speicher zu lesen und anschließend die Firmware der Recheneinheit zu überschreiben. Damit dieser Prozess sicher unterbrechungsfrei von der Anschalteinheit ausgeführt wird, ist die Anschalteinheit eingerichtet, nach Empfangen des Datenpaketes, welches den Prozess der Firmwareaktualisierung einleitet, zunächst die Firmware komplett zu empfangen, wobei hierzu entsprechend viele Datenpakete für die Übertragung der Firmware empfangen werden. Nachdem die Anschalteinheit alle Datenpakete für die Firmware empfangen hat und diese vollständig in einen internen Speicher übernommen hat, prüft die Anschalteinheit ob in einem internen Energiespeicher genug Energie zur Verfügung steht, so dass die Firmwareaktualisierung unterbrechungsfrei vorgenommen werden kann. Danach versetzt die Anschalteinheit ihren Bootloader in einen entsprechenden Modus um die Firmwareaktualisierung durchzuführen und startet sich anschließend entsprechend neu. Der Bootloader übernimmt dann den Aktualisierungprozess und startet die Recheneinheit nach der Aktualisierung neu.

Es kann vorgesehen sein, dass die Energieempfangselektronik und die Kommunikationselektronik auf jeweils einer eigenen ersten Platine angeordnet sind.

Eine solche Anschalteinheit kann an der beweglichen Einheit befestigt werden. Dadurch, dass die Anschalteinheit den Bauraum für die Anwendungselektronik aufweist, kann beispielsweise ein Hersteller des linearen Transportsystems das lineare Transportsystem inklusive der beweglichen Einheit und der Anschalteinheit zur Verfügung stellen, während ein weiterer Hersteller ein Werkzeug für das lineare Transportsystem und die Anwendungselektronik zur Verfügung stellt. Die Anwendungselektronik kann dann eingerichtet sein, anhand den über die Kommunikationsverbindung übergebenen zweiten Daten das Werkzeug zu steuern. Der Hersteller des linearen Transportsystems kann dabei die Datenstruktur der zweiten Daten vorgeben und veröffentlichen, so dass der weitere Hersteller des Werkzeugs eine entsprechende Anwendungselektronik bereitstellen kann. Somit wird ein modularer Aufbau ermöglicht, bei dem eine Datenstruktur vorgegeben ist und eine Vielzahl von Werkzeugherstellern unterschiedliche Werkzeuge bereitstellen können.

Das Gehäuse kann dazu öffenbar sein, so dass ein Werkzeughersteller Zugriff auf den Bauraum für die Anwendungselektronik erhält. Dies kann beispielsweise mittels eines durch Schrauben befestigbaren Deckels oder eines mittels Clip-System befestigbaren Deckels realisiert sein.

In einer Ausführungsform ist die Anschalteinheit eingerichtet, anhand der Datenstruktur einen Empfang des ersten Datensignals zu steuern und anhand der Datenstruktur die für eine Weitergabe an das Werkzeug notwendigen zweiten Daten zu berechnen.

Dadurch kann eine effiziente Datenübertragung von einer stationären Einheit des linearen Transportsystems zum Werkzeug ermöglicht werden. Insbesondere kann die Datenstruktur Teil der ersten Daten sein und von der stationären Einheit zur Anschalteinheit übertragen werden. Die Anschalteinheit kann dann eingerichtet sein, aus den ersten Daten diejenigen Daten auszuwählen, anhand derer die Kommunikation mit der stationären Einheit gesteuert werden kann und diejenigen Daten als zweite Daten auszuwählen, die an das Werkzeug weitergegeben werden sollen.

In einer Ausführungsform der Anschalteinheit ist eine Anwendungselektronik im Bauraum angeordnet. Die Anwendungselektronik weist Anschlüsse zum Anschluss der Anwendungselektronik an die erste Schnittstelle auf. Ferner weist die Anwendungselektronik eine zweite Schnittstelle für einen Werkzeuganschluss auf, wobei die zweite Schnittstelle in der Öffnung des Gehäuses angeordnet ist. In diesem Fall kann auch die Anwendungselektronik vom Hersteller des linearen Transportsystems zur Verfügung gestellt werden. Ein Hersteller des Werkzeugs kann dann ein an die zweite Schnittstelle angepasstes Werkzeug zur Verfügung stellen. Die zweite Schnittstelle kann zum Anschluss des Werkzeugs ausgestaltet sein und beispielsweise Steckverbindungselemente oder Lötkontakte aufweisen. Es kann vorgesehen sein, dass die Anwendungselektronik mehrere zweite Schnittstellen für jeweils einen Werkzeuganschluss für jeweils ein Werkzeug aufweist.

In einer Ausführungsform ist die Anwendungselektronik eingerichtet, das zweite Datensignal zu verarbeiten und zumindest eine Spannung und/oder Daten an der zweiten Schnittstelle anhand des zweiten Datensignals bereitzustellen und/oder Daten an der zweiten Schnittstelle anhand des zweiten Datensignals auszulesen. Insbesondere kann das zweite Datensignal in einem Steuerelement der Anwendungselektronik verarbeitet werden.

In einer Ausführungsform der Anschalteinheit ist die Anwendungselektronik auf einer zweiten Platine angeordnet. Dies ermöglicht einen effizienten modularen Aufbau, wobei unterschiedliche Anwendungselektroniken für unterschiedliche Werkzeuge vorgesehen und auf der zweiten Platine angeordnet sein können. Die zweite Platine kann dann in den Bauraum eingesetzt werden. Ferner ermöglicht eine solche Ausgestaltung ebenfalls einen Werkzeugaustausch, bei dem gleichzeitig gegebenenfalls auch die zweite Platine ausgetauscht werden kann bzw. muss, sonst jedoch die Anschalteinheit nicht verändert werden muss. Alternativ kann die Anwendungselektronik auch auf der ersten Platine angeordnet sein und die erste Schnittstelle als Leiterbahnen der ersten Platine ausgestaltet sein.

In einer Ausführungsform der Anschalteinheit weist die zweite Schnittstelle ein Steckelement auf, wobei das Steckelement die Öffnung dicht verschließt. Die Öffnung wird dabei an das Steckelement angepasst, so dass das Steckelement, beispielsweise ein Stecker oder eine Buchse, in die Öffnung eingesetzt und dann derart befestigt werden kann, dass das Gehäuse dicht verschlossen wird und somit keine Flüssigkeiten beziehungsweise Gase mehr in das Gehäuse gelangen können. Das Gehäuse kann ferner Dichtungen aufweisen, mit denen eine Gehäuseöffnung beim Verschließen abgedichtet werden kann. Ebenfalls kann eine Dichtung am Steckelement vorgesehen sein, mit der die Öffnung dicht verschlossen ist.

Die zweite Schnittstelle kann also als Steckelement ausgestaltet sein, wobei auch nicht dicht verschließende Steckelemente eingesetzt werden können. Alternativ kann die zweite Schnittstelle als Klemm-, Schneid, Schraub- oder Lötverbindung ausgestaltet sein.

In einer Ausführungsform der Anschalteinheit ist das Gehäuse mit einer aushärtenden Flüssigkeit vergossen. Dadurch kann die zumindest eine erste Platine und die Anwendungselektronik innerhalb des Gehäuses fixiert werden, ebenso die Energieempfangsspule und die bewegliche Antenne. Dadurch können aufgrund einer Bewegung der beweglichen Einheit im linearen Transportsystem auftretende Vibrationen und/oder Beschleunigungen, die potentiell zu einer Beschädigung der ersten Platine, der Anwendungselektronik beziehungsweise der Energieempfangsspule und der beweglichen Antenne führen könnten, die einzelnen Elemente der Anschalteinheit nicht mehr gegeneinander bewegen, so dass eine mechanisch stabilere Anschalteinheit ermöglicht wird. Eine mechanische Beschädigung der Anschalteinheit aufgrund der Bewegung der beweglichen Einheit im linearen Transportsystem wird also reduziert. Durch die aushärtende Flüssigkeit sind die einzelnen Elemente der Anschalteinheit auch besser gegen Flüssigkeiten und Gase geschützt.

In einer Ausführungsform der Anschalteinheit ist die Anwendungselektronik eingerichtet, einen Schrittmotor und/oder einen Servomotor und/oder einen Gleichstrommotor des Werkzeugs anzusteuern und/oder einen Spulenstrom für eine Spule des Werkzeugs zu steuern und/oder digitale Ein- und/oder Ausgänge bereitzustellen und/oder analoge Ein- und/oder Ausgänge bereitzustellen und/oder eine oder mehrere Kommunikationsschnittstellen bereitzustellen und/oder eine oder mehrere Schnittstellen für einen Drehgeber oder Lineargeber bereitzustellen.

In einer Ausführungsform der Anschalteinheit ist die Energieempfangselektronik eingerichtet, eine über die Energieempfangsspule aufgenommene Wechselspannung in eine über die Spannungsversorgung bereitgestellte Gleichspannung zu wandeln. Kontaktlose Energieübertragung ist im Wesentlichen nur mittels Wechselspannungen zu realisieren und nicht mittels Gleichspannungen. Für die Anwendungselektronik und/oder das Werkzeug kann jedoch eine bereitgestellte Gleichspannung sinnvoller sein. Somit ermöglicht diese Ausführungsform eine verbesserte Energieversorgung von Anwendungselektronik und/oder Werkzeug.

In einer Ausführungsform der Anschalteinheit ist die Energieempfangselektronik eingerichtet, die Gleichspannung auf einen vorgegebenen Wert zu regeln. Dieser Wert kann beispielsweise 24 Volt betragen. 24 Volt eignen sich als Gleichspannung, da einerseits geringere Spannungen für Elektronik leicht aus einer höheren Spannung erzeugt werden können. Für das Werkzeug sind 24 Volt Gleichspannung in den meisten Fällen ebenfalls ausreichend.

In einer Ausführungsform der Anschalteinheit ist das Gehäuse in einer ersten Erstreckungsrichtung größer als in einer zweiten Erstreckungsrichtung. Das Gehäuse weist einen ersten Bereich und einen zweiten Bereich auf und ist im ersten Bereich in der zweiten Erstreckungsrichtung größer ist als im zweiten Bereich. Die die Energieempfangsspule und die bewegliche Antenne sind im ersten Bereich angeordnet. Die erste Platine und der Bauraum erstrecken sich über den ersten Bereich und den zweiten Bereich. Eine solche Anordnung der genannten Bauelemente ermöglicht eine effiziente und platzsparende Anordnung von Energieempfangsspule und beweglicher Antenne, Energieempfangselektronik und Kommunikationselektronik sowie Anwendungselektronik im Gehäuse.

In einer Ausführungsform ist das Gehäuse zumindest teilweise aus Metall gefertigt. Dadurch kann ein besserer Schutz gegen mechanische Einflüsse erreicht werden. Ferner kann dadurch eine Wäremeableitfähigkeit des Gehäuses verbessert werden, so dass zum Beispiel eine Abwärme der Energieempfangselektronik und/oder Kommunikationselektronik und/oder Anwendungselektronik besser aus dem Gehäuse abgeleitet werden kann. Somit kann die bewegliche Einheit gleichzeitig als Kühlkörper fungieren.

Das Gehäuse kann ferner Kühlelemente wie beispielsweise Kühlrippen aufweisen, um die Wärmeableitung weiter zu verbessern. Die Energieempfangsspule beziehungsweise die bewegliche Antenne können hinter einer Aussparung des Gehäuses angebracht sein, wobei die Aussparung über einen entsprechenden Aufkleber abgedeckt sein kann.

In einer Ausführungsform der Anschalteinheit weist das Metall Aluminium und/oder Edelstahl auf. Das Gehäuse kann mit entsprechenden Radien ausgeführt sein derart dass Richtlinien für hygienisches Design erfüllt sind. Sollten Dichtungen am Gehäuse verbaut sein, können diese aus einem entsprechend zugelassen Kunststoff ausgeführt sein. Ein Aufkleber zur Abdeckung von Energieempfangsspule beziehungsweise beweglicher Antenne kann ebenfalls die entsprechenden Richtlinien einhalten.

In einer Ausführungsform der Anschalteinheit ist diese mit einem weiteren Speicher ausgestattet, welcher groß genug ist, die Firmware der Anwendungselektronik zu speichern. Ferner ist die Anschalteinheit dazu eingerichtet, ein weiteres Datenpaket zu empfangen, wobei die Anschalteinheit eingerichtet ist, bei Empfang des weiteren Datenpakets eine Firmwareaktualisierung der Anwendungselektronik durchzuführen. Der weitere Speicher kann dabei identisch zum Speicher für die Firmwareaktualisierung der Anschalteinheit sein. Damit der Speicher groß genug ist, kann vorgesehen sein, dass eine Speicherkapazität typischerweise mindestens 64 und maximal 1024 Kilobyte beträgt, es sind jedoch auch andere Speicherkapazitäten denkbar. Dies gilt insbesondere für Speicher, die als Flash-Speicher ausgestaltet sind. Ein EPROM kann auch eine Speicherkapazität zwischen 2 und 4 Megabyte aufweisen. Insbesondere können also Speicher mit einer Speicherkapazität zwischen 64 Kilobyte und 4 Megabyte groß genug sein.

In einem Protokoll für die Anwendungselektronik sind entsprechende Kommunikationsbefehle festgelegt, die die Anwendungselektronik in den Modus versetzen eine neue Firmware zu empfangen. Damit dieser Prozess sicher unterbrechungsfrei von der Anschalteinheit ausgeführt wird, ist die Anschalteinheit eingerichtet nach Empfangen des weiteren Datenpaketes, welches den Prozess der Firmwareaktualisierung der Anwendungselektronik einleitet, zunächst die Firmware komplett zu empfangen, wobei hierzu entsprechend viele Datenpakete für die Übertragung der Firmware empfangen werden. Nachdem die Anschalteinheit alle Datenpakete für die Firmware empfangen hat und diese vollständig in einen internen Speicher übernommen hat, prüft die Anschalteinheit, ob in einem internen Energiespeicher genug Energie zur Verfügung steht, so dass die Firmwareaktualisierung unterbrechungsfrei vorgenommen werden kann. Nun versetzt die Anschalteinheit die Anwendungselektronik in einen Modus für die Firmwareaktualisierung. Die Firmware wird nun vom internen Speicher auf die Anwendungselektronik komplett übertragen und anschließend ein Kommando zum Update gegeben.

In einer Ausführungsform der Anschalteinheit ist diese dazu eingerichtet, die Firmware der Anschalteinheit oder der Anwendungselektronik in einen internen Speicher zu speichern. Des Weiteren ist die Anschalteinheit dazu eingerichtet, die empfangene Firmware anschließend auf Gültigkeit zu prüfen. Die Anschalteinheit kann hierzu beispielsweise eine Hashsumme bilden und die Hashsumme mittels eines internen abgelegten Zertifikats überprüfen.

Die Erfindung umfasst ferner eine bewegliche Einheit eines linearen Transportsystems mit einer erfindungsgemäßen Anschalteinheit und einer Befestigungsmöglichkeit für ein Werkzeug. Die bewegliche Einheit weist Laufrollen auf, wobei die Laufrollen auf einer Führungsschiene des linearen Transportsystems abrollen können. Die bewegliche Einheit weist einen Rahmen auf, wobei die Laufrollen am Rahmen angeordnet sind und wobei die Anschalteinheit am Rahmen befestigt ist. Die Befestigungsmöglichkeit für das Werkzeug ist ebenfalls am Rahmen angeordnet. Mit einer solchen beweglichen Einheit kann effizient ein Werkzeug in einem linearen Transportsystem angeordnet werden.

In einer Ausführungsform der beweglichen Einheit ist ein Werkzeug an der Befestigungsmöglichkeit befestigt. Das Werkzeug ist mit der Anschalteinheit verbunden.

Die Erfindung umfasst ferner ein lineares Transportsystem mit einer erfindungsgemäßen beweglichen Einheit. Das lineare Transportsystem weist eine Führungsschiene zum Führen der beweglichen Einheit, mehrere stationäre Einheiten sowie einen Linearmotor zum Antreiben der beweglichen Einheit entlang der Führungsschiene auf. Der Linearmotor umfasst einen Stator und einen Läufer, wobei der Stator die stationären Einheiten umfasst, welche jeweils eine oder mehrere Antriebsspulen umfassen. Der Läufer ist an der beweglichen Einheit angeordnet und umfasst einen oder mehrere Magnete. Zumindest einige der stationären Einheiten, insbesondere alle stationären Einheiten, umfassen jeweils eine oder mehrere Energiesendespulen und eine oder mehrere stationäre Antennen.

Die Erfindung wird nachfolgend anhand von Ausführungsbeispielen und unter Bezugnahme auf Figuren näher erläutert. Dabei zeigen jeweils in schematischer Darstellung
- Fig. 1: eine isometrische Ansicht eines linearen Transportsystems;
- Fig. 2: eine isometrische Detailansicht einer stationären Einheit und einer beweglichen Einheit des linearen Transportsystems der Fig. 1;
- Fig. 3: eine isometrische Ansicht der beweglichen Einheit der Fig. 2;
- Fig. 4: eine Draufsicht auf die bewegliche Einheit der Fig. 3;
- Fig. 5: einen Querschnitt durch eine Anschalteinheit;
- Fig. 6: eine isometrische Ansicht einer beweglichen Einheit mit einem Greifer;
- Fig. 7: eine seitliche Ansicht der beweglichen Einheit der Fig. 6;
- Fig. 8: eine Draufsicht auf die bewegliche Einheit der Fig. 6;
- Fig. 9: eine isometrische Ansicht einer beweglichen Einheit mit einem Vakuumheber;
- Fig. 10: eine isometrische Ansicht einer beweglichen Einheit mit einer Rotationseinheit; und
- Fig. 11 bis 19: verschiedene Schaltungen der Anwendungselektronik.

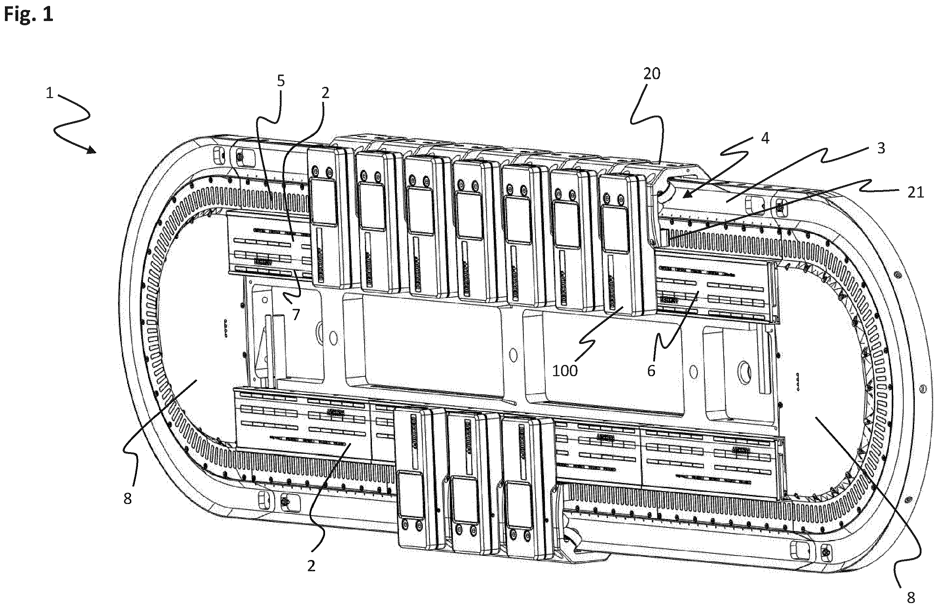

Fig. 1 zeigt eine isometrische Ansicht eines linearen Transportsystems 1 mit acht stationären Einheiten 2, zwei Kurvenmoduleinheiten 8, zehn beweglichen Einheiten 20 mit jeweils einer Anschalteinheit 100, die an der jeweiligen beweglichen Einheit 20 befestigt ist. Das lineare Transportsystem 1 weist in dem dargestellten Ausführungsbeispiel eine umlaufende Führungsschiene 3 zum Führen der beweglichen Einheiten 20 auf. Das lineare Transportsystem 1 kann mehr oder weniger als die eine in Fig. 1 gezeigten stationären Einheiten 2 umfassen. Ein Linearmotor 4 zum Antreiben der beweglichen Einheiten 20 entlang der Führungsschiene 3 umfasst einen Stator 5 und einen Läufer 21. Der Stator 5 ist an den stationären Einheiten 2 und den Kurvenmoduleinheiten 8 angeordnet und umfasst jeweils eine oder mehrere Antriebsspulen (nicht gezeigt) innerhalb der stationären Einheiten 2 bzw. den Kurvenmoduleinheiten 8. Der Läufer 21 ist jeweils an der beweglichen Einheit 20 angeordnet und umfasst einen oder mehrere Magnete 22.

Alternativ zu der in Fig. 1 gezeigten Führungsschiene 3 können auch Kugelumlaufführungen oder Gleitführungen verwendet werden, um eine Führung einer Bewegung der beweglichen Einheiten 20 zu erreichen.

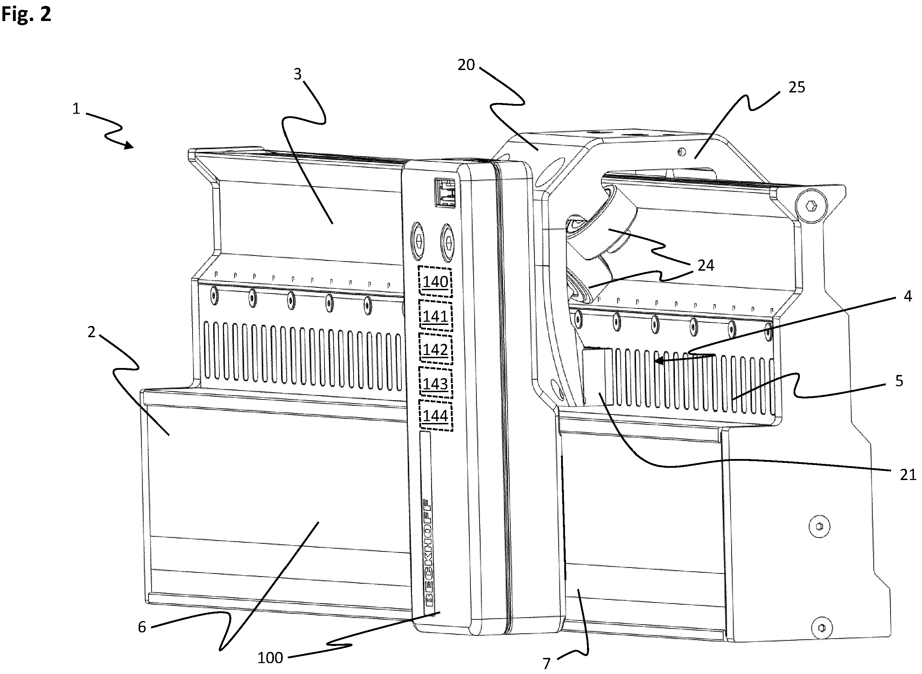

Fig. 2 zeigt in einer isometrischen Detailansicht eine stationären Einheit 2 und eine beweglichen Einheit 20 des in Fig. 1 gezeigten linearen Transportsystems 1. Die bewegliche Einheit 20 weist mehrere Laufrollen 24 auf, wobei die Laufrollen 24 auf der Führungsschiene 3 des linearen Transportsystems 1 abrollen können. Die bewegliche Einheit 20 weist einen Rahmen 25 auf, wobei die Laufrollen 24 am Rahmen 25 angeordnet und befestigt sind. Die stationäre Einheit 2 weist in einem Bereich, der teilweise von der Anschalteinheit 100 überdeckt wird, mindestens eine stationäre Antenne 6 (nicht gezeigt) und mindestens eine Energiesendespule 7 (nicht gezeigt) auf.

Die Anschalteinheit 100 weist eine optionale Recheneinheit 140, einen optionalen Speicher 141, einen optionalen weiteren Speicher 142, einen optionalen internen Speicher 143 und einen optionalen internen Energiespeicher 144 auf. Der interne Speicher 143 kann dabei ein flüchtiger Speicher, beispielsweise ein Random-Access-Memory (RAM) sein.

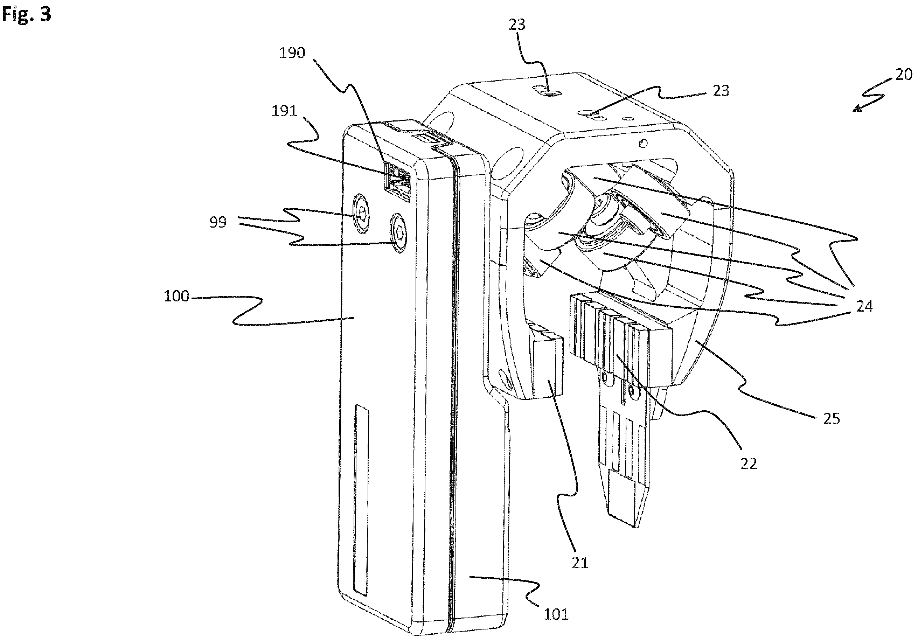

Fig. 3 zeigt in einer isometrischen Ansicht die beweglichen Einheit 20 der Fig. 2 ohne die stationäre Einheit. Die bewegliche Einheit 20 weist zumindest eine Befestigungsmöglichkeit 23 für ein Werkzeug, hier ausgestaltet als Gewindelöcher, auf. Ein Werkzeug kann also an der beweglichen Einheit 20 mittels Schrauben beziehungsweise Passstiften befestigt werden. Es sind jedoch auch Alternativen zu Gewindelöchern denkbar. Ferner können auch Befestigungsmöglichkeiten für mehr als ein Werkzeug vorgesehen sein. Wie die Laufrollen 24, ist auch die Anschalteinheit 100 am Rahmen 25 befestigt. Die Anschalteinheit 100 ist dabei mittels zweier Schrauben 99 an der beweglichen Einheit 20 befestigt. Die Anschalteinheit 100 weist ein Gehäuse 101 mit einer Öffnung 190 auf. In der Öffnung 190 ist ein Steckelement 191 angeordnet. Die Öffnung 190 kann auch an einer anderen Stelle als in Fig. 3 gezeigt am Gehäuse 101 angeordnet sein. Das Gehäuse 101 kann dabei aus mehreren Teilen bestehen, welche zu einem Gehäuse 101 verbunden werden.

Anstelle des Steckelements 191 kann auch ein anderes Verbindungselement vorgesehen sein, beispielsweise Lötkontakte Schraubkontakte, Stecker bzw. Kupplung, Steccklemmen oder Schneidklemmen.

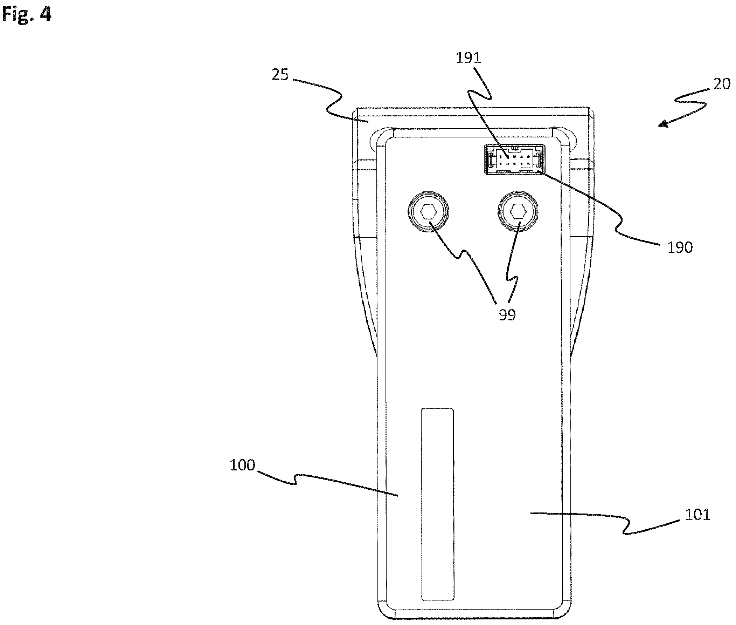

Fig. 4 zeigt eine seitliche Ansicht der beweglichen Einheit der Fig. 3.

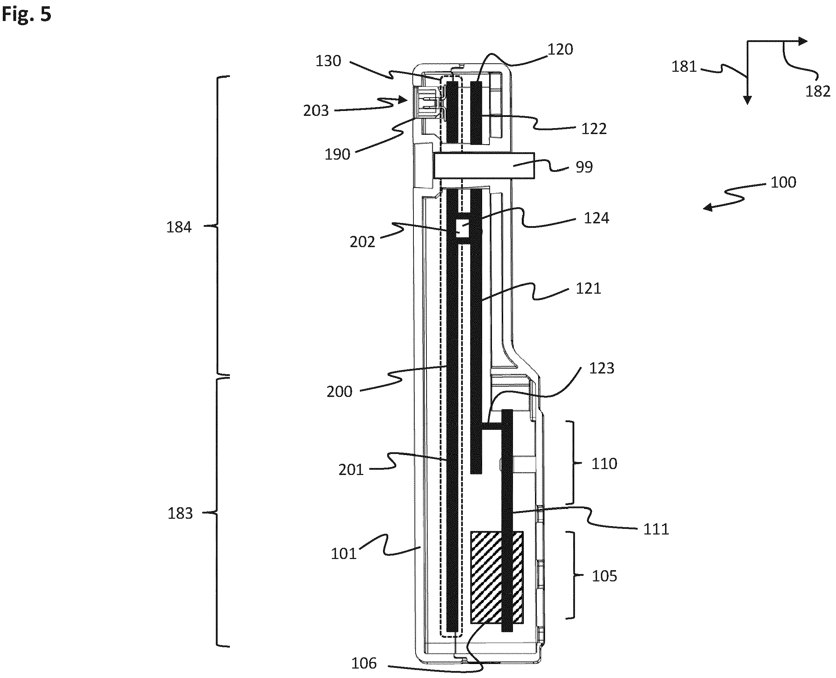

Fig. 5 zeigt einen Querschnitt durch die Anschalteinheit 100 der Fig. 1 bis 4. Die Anschalteinheit 100 weist ein Gehäuse 101 auf. Innerhalb des Gehäuses 101 ist eine Energieempfangsspule 105 mit ferromagnetischem Kern 106 und eine bewegliche Antenne 110 angeordnet derart, dass die Energieempfangsspule 105 der Energiesendespule 7 und die bewegliche Antenne 110 der stationären Antenne 6 der Fig. 2 gegenüberliegen. Der Begriff bewegliche Antenne 110 soll dabei verdeutlichen, dass sich die bewegliche Antenne 110 zusammen mit der beweglichen Einheit 20 bewegt. Die bewegliche Antenne 110 kann in einer festen Position relativ zur beweglichen Einheit 20 angeordnet sein. Die Energieempfangsspule 105 und die bewegliche Antenne 110 sind im dargestellten Ausführungsbeispiel auf einer gemeinsamen Spulenplatine 111 angeordnet. Alternativ können die Energieempfangsspule 105 und die bewegliche Antenne 110 auch auf getrennten Platinen angeordnet sein. Eine erste Platine 120 mit einer Energieempfangselektronik 121 sowie einer Kommunikationselektronik 122 ist ebenfalls innerhalb des Gehäuses 101 angeordnet und mit der Spulenplatine 111 über eine Verbindung 123 verbunden, wobei die Verbindung 123 die Energieempfangsspule 105 mit der Energieempfangselektronik 121 und die bewegliche Antenne 110 mit der Kommunikationselektronik 122 verbindet. Das Gehäuse 101 weist eine Öffnung 190 für Anschlüsse des Werkzeugs auf. Ferner weist das Gehäuse 101 einen Bauraum 130 für eine Anwendungselektronik 200 auf. In Fig. 5 ist die Anwendungselektronik 200 in Form einer zweiten Platine 201 dargestellt. Die erste Platine 120 weist eine erste Schnittstelle 124 für die Anwendungselektronik 200 mit einer Spannungsversorgung und einer Kommunikationsverbindung auf. Die erste Schnittstelle 124 kann unterschiedlich ausgeführt sein, beispielsweise als Stecker, feste Klemm- Schneid- oder Schraubverbindung oder als verlötete Leitungen. Es können auch Leiterbahnen auf einer Platine sein, wenn auch die Anwendungselektronik 200 auf der ersten Platine 120 angeordnet ist. Die Kommunikationselektronik 122 ist eingerichtet, ein erstes Datensignal über die bewegliche Antenne 110 zu empfangen, aus einer Information über eine Datenstruktur des ersten Datensignals und dem ersten Datensignal ein zweites Datensignal zu berechnen und das zweite Datensignal an der Kommunikationsverbindung der Schnittstelle 124 zur Verfügung zu stellen. Dabei kann es vorgesehen sein, dass eine Datenstruktur des zweiten Datensignals von einem Hersteller der Anschalteinheit 100 vorgegeben wird, wobei ein Hersteller eines Werkzeugs und der zugehörigen Anwendungselektronik 200 die Anwendungselektronik 200 derart ausgestaltet, dass die Anwendungselektronik 200 das zweite Datensignal verarbeiten kann.

In einem Ausführungsbeispiel weist die Anwendungselektronik 200 Anschlüsse 202 zum Anschluss der Anwendungselektronik 200 an die erste Schnittstelle 124 auf. Ferner weist die Anwendungselektronik 200 eine zweite Schnittstelle 203 für einen Werkzeuganschluss auf, wobei die zweite Schnittstelle 203 in der Öffnung 190 des Gehäuses 101 angeordnet ist. Die zweite Schnittstelle 203 kann dabei das Steckelement 191 der Fig. 3 und 4 umfassen.

Anstelle der in Fig. 5 gezeigten zweite Platinen 201 kann die Anwendungselektronik 200 auch ohne Platine im Gehäuse 101 angeordnet sein.

In einem Ausführungsbeispiel weist die zweite Schnittstelle 203 ein Steckelement, beispielsweise das Steckelement 191 der Fig. 3 und 4, auf, wobei das Steckelement die Öffnung 190 dicht verschließt. In diesem Fall kann es vorgesehen sein, das Gehäuse 101 mit einer aushärtenden Flüssigkeit zu vergießen.

In einem Ausführungsbeispiel ist die Energieempfangselektronik 121 eingerichtet, eine über die Energieempfangsspule 105 aufgenommene Wechselspannung in eine über die Spannungsversorgung der ersten Schnittstelle 124 bereitgestellte Gleichspannung zu wandeln. Dabei kann es vorgesehen sein, die Gleichspannung auf einen vorgegebenen Wert zu regeln, beispielsweise auf vierundzwanzig Volt. Hierzu kann es beispielsweise vorgesehen sein, dass auf der ersten Platine 120 eine Spannungsversorgungseinheit angeordnet ist, die zusätzlich auch dazu dient, die Energieempfangselektronik 121 und die Kommunikationselektronik 122 mit Spannung zu versorgen.

In einem Ausführungsbeispiel, wie in Fig. 5 gezeigt, ist das Gehäuse 101 in einer ersten Erstreckungsrichtung 181 größer als in einer zweiten Erstreckungsrichtung 182. Das Gehäuse 101 weist einen ersten Bereich 183 und einen zweiten Bereich 184 auf. Das Gehäuse 101 ist im ersten Bereich 183 in der zweiten Erstreckungsrichtung 182 größer ist als im zweiten Bereich 184. Die Energieempfangsspule 105 und die bewegliche Antenne 110 sind im ersten Bereich 183 angeordnet. Die erste Platine 120 und der Bauraum 130 erstrecken sich über den ersten Bereich 183 und den zweiten Bereich 184. Dadurch, dass die Energieempfangsspule 105 und die bewegliche Antenne 110 im ersten Bereich 183 angeordnet sind, können diese dort angeordnet sein, wo das Gehäuse 101 in der zweiten Erstreckungsrichtung 182 größer ist. Dadurch können die Energieempfangsspule 105 und die bewegliche Antenne 110 im Betrieb des linearen Transportsystems 1 näher an der Energiesendespule 7 beziehungsweise stationären Antenne 6 angeordnet sein.

In einem Ausführungsbeispiel weist die Anschalteinheit 100 einen optionalen Speicher 141 (wie in Fig. 2 gezeigt) auf. Der Speicher 141 ist groß genug um eine Firmware der Anschalteinheit 100 zu speichern. Ferner ist die Anschalteinheit 100 eingerichtet, ein Datenpaket zu empfangen, wobei die Anschalteinheit 100 eingerichtet ist, bei Empfang des Datenpakets eine Firmwareaktualisierung der Anschalteinheit 100 durchzuführen.

Es kann vorgesehen sein, dass eine Recheneinheit 140 der Anschalteinheit 100 für die Durchführung der Firmwareaktualisierung einen speziellen Bootloader beinhaltet, wobei der Bootloader in der Lage ist, die Firmware aus dem Speicher 141 zu lesen und anschließend die Firmware der Recheneinheit 140 zu überschreiben. Damit dieser Prozess sicher unterbrechungsfrei von der Anschalteinheit 100 ausgeführt wird, kann die Anschalteinheit 100 eingerichtet sein, nach Empfangen des Datenpaketes, welches den Prozess der Firmwareaktualisierung einleitet, zunächst die Firmware komplett zu empfangen, wobei hierzu entsprechend viele Datenpakete für die Übertragung der Firmware empfangen werden können. Nachdem die Anschalteinheit 100 alle Datenpakete für die Firmware empfangen hat und diese vollständig in einen internen Speicher 143 übernommen hat, prüft die Anschalteinheit 100 ob in einem internen Energiespeicher 144 genug Energie zur Verfügung steht, so dass die Firmwareaktualisierung unterbrechungsfrei vorgenommen werden kann. Danach versetzt die Anschalteinheit 100 ihren Bootloader in einen entsprechenden Modus um die Firmwareaktualisierung durchzuführen und startet sich anschließend entsprechend neu. Der Bootloader übernimmt dann den Aktualisierungsprozess und startet die Recheneinheit 140 nach der Aktualisierung neu.

In einem Ausführungsbeispiel ist die Anschalteinheit 100 mit einem optionalen weiteren Speicher 142 ausgestattet, welcher groß genug ist die Firmware der Anwendungselektronik 200 zu speichern. Ferner ist die Anschalteinheit 100 dazu eingerichtet, ein weiteres Datenpaket zu empfangen, wobei die Anschalteinheit 100 eingerichtet ist, bei Empfang des weiteren Datenpakets eine Firmwareaktualisierung der Anwendungselektronik 200 durchzuführen. Der weitere Speicher 142 kann dabei identisch zum Speicher 141 für die Firmwareaktualisierung der Anschalteinheit 100 sein.

In einem Protokoll für die Anwendungselektronik 200 sind entsprechende Kommunikationsbefehle festgelegt, die die Anwendungselektronik 200 in den Modus versetzen eine neue Firmware zu empfangen. Damit dieser Prozess sicher unterbrechungsfrei von der Anschalteinheit 100 ausgeführt wird, ist die Anschalteinheit 100 eingerichtet nach Empfangen des weiteren Datenpaketes, welches den Prozess der Firmwareaktualisierung der Anwendungselektronik 200 einleitet, zunächst die Firmware komplett zu empfangen, wobei hierzu entsprechend viele Datenpakete für die Übertragung der Firmware empfangen werden. Nachdem die Anschalteinheit 100 alle Datenpakete für die Firmware empfangen hat und diese vollständig in einen internen Speicher 143 übernommen hat, prüft die Anschalteinheit 100, ob in einem internen Energiespeicher 144 genug Energie zur Verfügung steht, so dass die Firmwareaktualisierung unterbrechungsfrei vorgenommen werden kann. Nun versetzt die Anschalteinheit 100 die Anwendungselektronik 200 in einen Modus für die Firmwareaktualisierung. Die Firmware wird nun vom internen Speicher 143 auf die Anwendungselektronik 200 komplett übertragen und anschließend ein Kommando zum Update gegeben.

In einer Ausführungsform der Anschalteinheit 100 ist diese dazu eingerichtet, die Firmware der Anschalteinheit 100 oder der Anwendungselektronik 200 in einen internen Speicher 143 zu speichern. Des Weiteren ist die Anschalteinheit 100 dazu eingerichtet, die empfangene Firmware anschließend auf Gültigkeit zu prüfen. Die Anschalteinheit 100 kann hierzu beispielsweise eine Hashsumme bilden und die Hashsumme mittels eines internen abgelegten Zertifikats überprüfen.

Die Firmware der Anwendungselektronik und/oder die Firmware der Anschalteinheit kann dabei Fahrprofile der beweglichen Einheiten 20 oder Tabellen umfassen, die vorab als größere Datenstruktur übertragen werden.

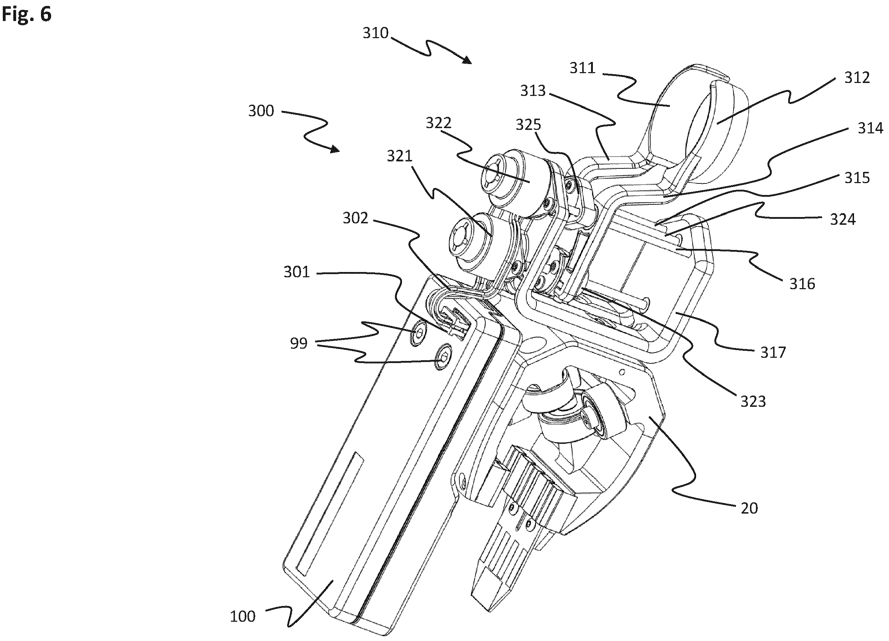

Fig. 6 zeigt eine isometrische Ansicht einer beweglichen Einheit 20 mit Anschalteinheit 100 und einem Werkzeug 300. Das Werkzeug 300 ist dabei als Greifer 310 ausgestaltet. Mittels Stecker 301 und Kabel 302 ist der Greifer 310, also das Werkzeug 300, mit der Anschalteinheit 100 verbunden.

Der Greifer 310 weist eine erste Greiferschale 311 und eine zweite Greiferschale 312 auf. Die erste Greiferschale 311 ist an einem ersten Bewegungswandler 313 angeordnet. Die zweite Greiferschale 312 ist an einem zweiten Bewegungswandler 314 angeordnet. Der erste Bewegungswandler 313 ist um eine erste Achsstange 315 drehbar. Der zweite Bewegungswandler 314 ist um eine zweite Achsstange 316 drehbar. Die beiden Achsstangen 315, 316 sind an einem Greiferrahmen 317 befestigt. Die erste Achsstange 315 und die zweite Achsstange 316 sind parallel zueinander angeordnet. Durch eine entgegengesetzte Bewegung des ersten Bewegungswandlers 313 um die erste Achsstange 315 und des zweiten Bewegungswandlers 314 und die zweite Achsstange 316 kann eine Öffnung beziehungsweise eine Schließung der beiden Greiferschalen 311, 312 durchgeführt werden. Der Greifer 310 weist hierzu einen ersten Motor 321 auf, der am Greiferrahmen 317 angeordnet ist. Der erste Motor 321 kann einen konischen Körper 323 parallel zu den Achsstangen 315, 316 verschieben. Mittels einer in Fig. 6 nicht gezeigten Feder kann dabei eine Kraft auf die beiden Bewegungswandler 313, 314 ausgeübt werden, wobei dadurch die beiden Bewegungswandler 313, 314 an dem konischen Körper 323 anliegen und eine Bewegung des konischen Körpers 323 parallel zu den beiden Achsstangen 315, 316 eine Drehung der beiden Bewegungswandler 313, 314 um die beiden korrespondierenden Achsstangen 315, 316 auslöst, so dass die beiden Greiferschalen 311, 312 geöffnet oder geschlossen werden. Alternativ kann auch ein anderer mechanischer Mechanismus vorgesehen sein, mit dem die beiden Greiferschalen 311, 312 geöffnet oder geschlossen werden können.

Der Greifer 310 weist ferner einen zweiten Motor 322 auf, der eine im Bereich der beiden Achsstangen 315, 316 angeordnete Gewindestange 324 in Rotation versetzen kann und der ebenfalls am Greiferrahmen 317 angeordnet ist. Anstelle der Gewindestange 324 kann in anderen, nicht gezeigten, Ausführungsbeispielen auch eine Spindel eingesetzt werden. Eine Hebeeinheit 325 weist ein Innengewinde auf, in welches die Gewindestange 324 eingreift. Durch eine Rotation der Gewindestange 324 wird dabei die Hebeeinheit 325 parallel zu den beiden Achsstangen 315, 316 bewegt. Der erste Bewegungswandler 313 und der zweite Bewegungswandler 314 sind derart mit der Hebeeinheit 325 verbunden, dass durch eine Bewegung der Hebeeinheit 325 parallel zu den beiden Achsstangen 315, 316 die beiden Greiferschalen 311, 312 ebenfalls parallel zu den beiden Achsstangen 315, 316 bewegt werden.

Die Anschalteinheit 100 und insbesondere die Anwendungselektronik 200 in der Anschalteinheit 100 kann eingerichtet sein, den ersten Motor 321 und den zweiten Motor 322 anhand empfangener Daten zu steuern, beispielsweise indem mittels der Anschalteinheit 100 über das Steckelement 191 und den Stecker 301 eine Spannung an den ersten Motor 321 und/oder den zweiten Motor 322 angelegt wird. Das Werkzeug 300 kann dabei an den Befestigungsmöglichkeiten 23 der beweglichen Einheit 20 befestig sein. Die Befestigungsmöglichkeiten 23 können dabei wie in Fig. 3 erläutert ausgestaltet sein.

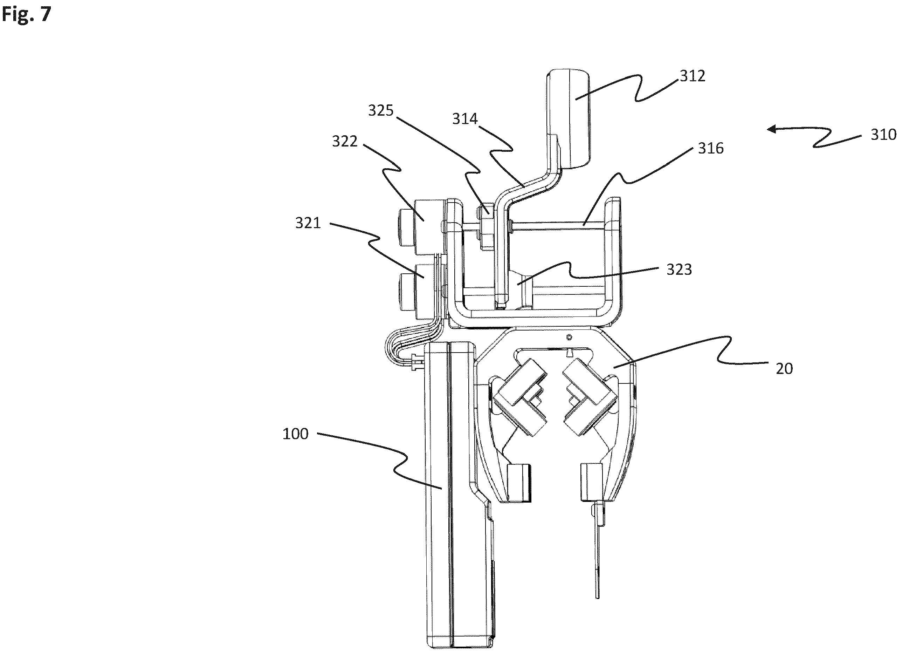

Fig. 7 zeigt eine seitliche Ansicht der beweglichen Einheit 20 der Fig. 6. Insbesondere der konische Körper 323 ist in dieser Ansicht besser sichtbar. Wird der konische Körper 323 in Richtung parallel zu den beiden Achsstangen 315, 316 bewegt (in Fig. 7 ist aufgrund der Perspektive nur die zweite Achsstange 316 sichtbar), so können die beiden Bewegungswandler 313, 314 relativ zueinander um die beiden Achsstangen 315, 316 rotiert werden und so die beiden Greiferschalen 311, 312 geöffnet oder geschlossen werden.

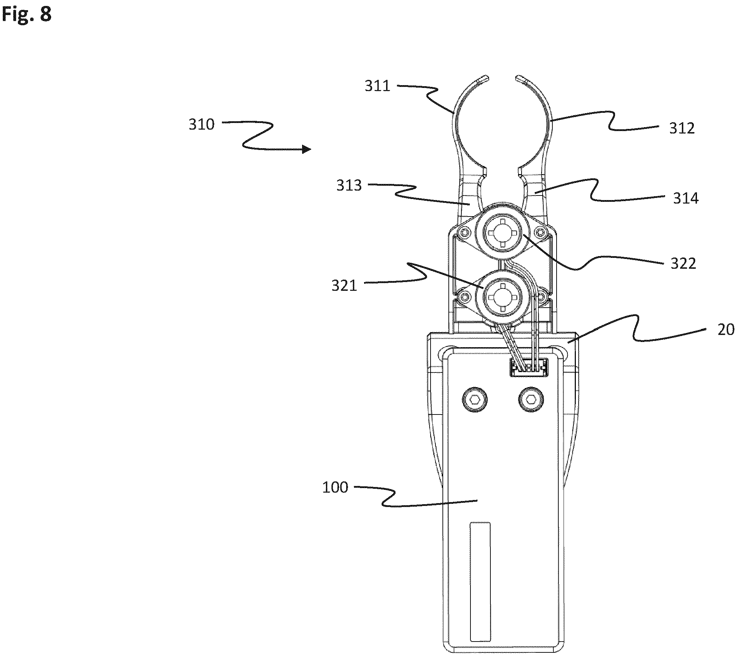

Fig. 8 zeigt eine Draufsicht auf die bewegliche Einheit 20 der Fig. 6 und 7. Mittels des ersten Motors 321 können die beiden Greiferschalen 311, 312 geöffnet oder geschlossen werden. Mittels des zweiten Motors 322 können die beiden Greiferschalen 311, 312 aus der Zeichenebene hinaus oder in die Zeichenebene hinein bewegt werden.

Die Anschalteinheit 100 der Fig. 6 bis 8 kann dabei eine Anwendungselektronik 200 umfassen, die eingerichtet ist, Spannungen für zwei Motoren auszugeben. Alternativ kann die Anwendungselektronik 200 eingerichtet sein, eine Versorgungsspannung und ein Datensignal auszugeben, wobei der Greifer dann eine Steuerung umfassen kann, um den ersten Motor 321 beziehungsweise den zweiten Motor 322 anhand des Datensignals zu steuern.

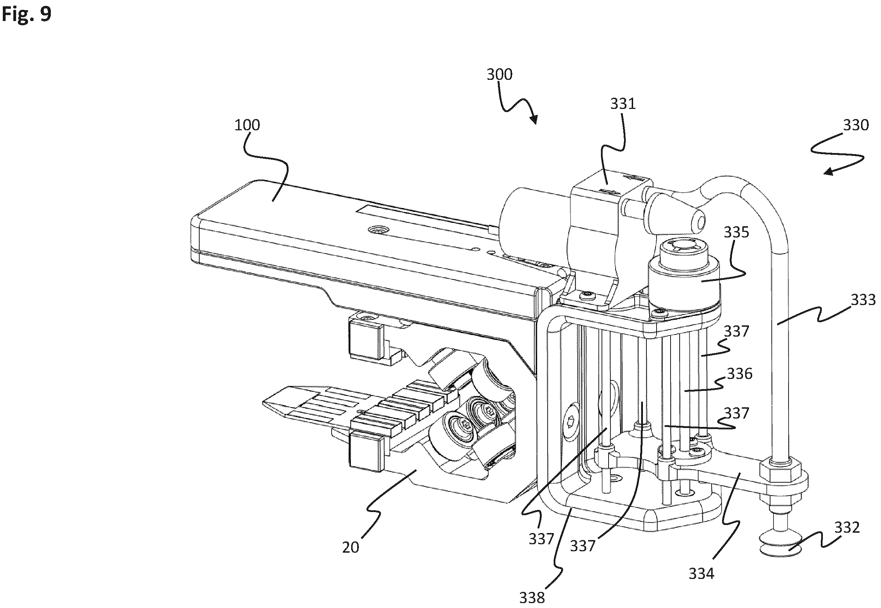

Fig. 9 zeigt eine isometrische Ansicht einer beweglichen Einheit 20 mit Anschalteinheit 100 und einem Werkzeug 300, wobei das Werkzeug 300 als Unterdruckheber 330 ausgestaltet ist. Der Unterdruckheber 330 weist eine Unterdruckpumpe 331, eine Saugeinheit 332 sowie einen Schlauch 333 auf, wobei der Schlauch 333 die Saugeinheit 332 mit der Unterdruckpumpe 331 verbindet. Liegt ein Werkstück an der Saugeinheit 332 an und wird nun mittels der Unterdruckpumpe 331 ein Unterdruck an der Saugeinheit 332 erzeugt, kann das Werkstück angesaugt werden und wird anschließend mit der beweglichen Einheit 20 mitbewegt.

Der Unterdruckheber 330 weist ferner einen Halter 334 auf, wobei der Schlauch 333 nahe der Saugeinheit 332 mit dem Halter 334 fest verbunden ist. An einem Heberahmen 338, an dem auch die Unterdruckpumpe 331 angeordnet ist, ist außerdem ein Hubmotor 335 angeordnet. Mittels des Hubmotors 335 kann eine Gewindestange 336 in Rotation versetzt werden, wobei die Gewindestange 336 in ein nicht gezeigtes Innengewinde des Halters 334 eingreift. Der Halter 334 ist mittels vier parallelen Stangen 337, die außerdem parallel zur Gewindestange 336 angeordnet sind, räumlich derart fixiert, dass nur eine Bewegung entlang der Längsachsen der Stangen möglich ist. Wird nun die Gewindestange 336 in Rotation versetzt, wird eine Bewegung des Halters 334 und damit der Saugeinheit 332 parallel zu den Stangen 337 ausgelöst, ähnlich zur bereits im Zusammenhang mit den Fig. 6 bis 8 beschriebenen Hubbewegung des Greifers 310 mittels des zweiten Motors 322.

Die Unterdruckpumpe 331 und der Hubmotor 335 sind ebenfalls mit der Anschalteinheit 100 verbunden, aufgrund der Perspektive der Fig. 9 ist diese Verbindung nicht sichtbar. Die Anschalteinheit 100 der Fig. 9 kann dabei eine Anwendungselektronik 200 umfassen, die eingerichtet ist, Spannungen für die Unterdruckpumpe 331 und den Hubmotor 335 auszugeben. Alternativ kann die Anwendungselektronik 200 eingerichtet sein, eine Versorgungsspannung und ein Datensignal auszugeben, wobei der Unterdruckheber 330 dann eine Steuerung umfassen kann, um den Hubmotor 335 beziehungsweise die Unterdruckpumpe 331 anhand des Datensignals zu steuern.

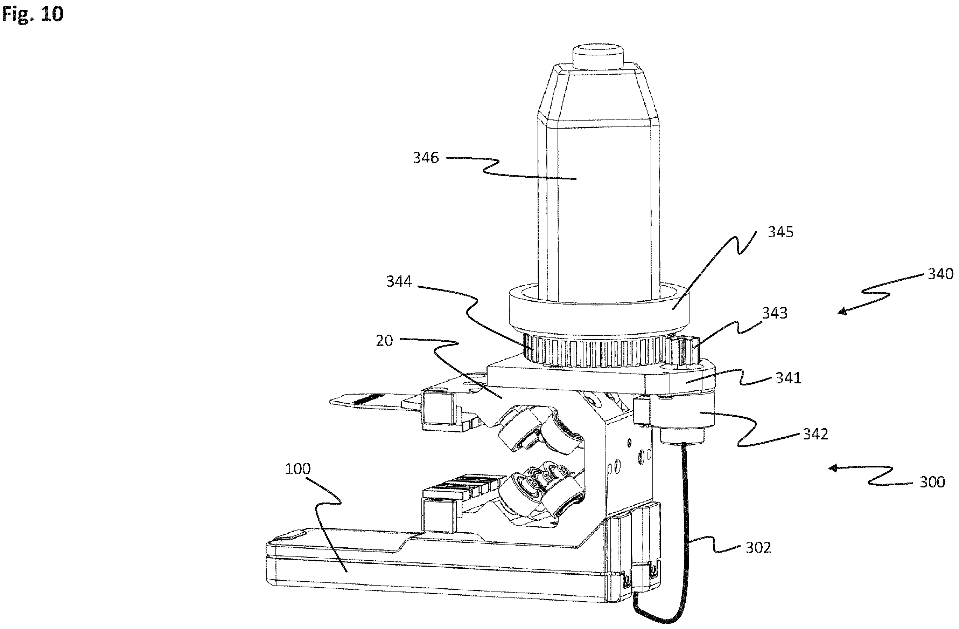

Fig. 10 zeigt eine isometrische Ansicht einer beweglichen Einheit 20 mit Anschalteinheit 100 und einem Werkzeug 300, wobei das Werkzeug 300 als Rotationseinheit 340 ausgestaltet ist. Die Rotationseinheit 340 weist eine Montageplatte 341 auf, wobei ein Antriebsmotor 342 an der Montageplatte 341 angeordnet ist. Auf einer dem Antriebsmotor 342 gegenüberliegenden Seite der Montageplatte 341 ist der Antriebsmotor 342 mit einem ersten Zahnrad 343 verbunden. Das erste Zahnrad 343 greift in ein zweites Zahnrad 344, wobei das zweite Zahnrad 344 mehr Zähne als das erste Zahnrad 343 aufweist. Das zweite Zahnrad 344 ist mit einem Drehteller 345 verbunden, wobei ein auf dem Drehteller 345 befindliches Produkt 346 mittels einer Drehung des Drehtellers 345 gedreht werden kann. Das erste Zahnrad 343 und das zweite Zahnrad 344 bilden dabei ein Untersetzungsgetriebe.

Der Antriebsmotor 342 ist mit der Anschalteinheit 100 mittels eines Kabels 302, wobei der Stecker aufgrund der Perspektive in Fig. 10 nicht dargestellt ist. Die Anschalteinheit 100 der Fig. 10 kann dabei eine Anwendungselektronik 200 umfassen, die eingerichtet ist, Spannungen für den Antriebsmotor 342 auszugeben. Alternativ kann die Anwendungselektronik 200 eingerichtet sein, eine Versorgungsspannung und ein Datensignal auszugeben, wobei die Rotationseinheit 340 dann eine Steuerung umfassen kann, um den Antriebsmotor 342 anhand des Datensignals zu steuern.

Die in den Figuren 6 bis 10 gezeigten Werkzeuge 300 sind exemplarische Beispiele, auch andere Werkzeuge 300, die mittels der Anschalteinheit 100 angesprochen werden können, sind denkbar. Unter anderem können Werkzeuge 300 auch Sensoren umfassen und dann mittels einer analogen oder digitalen Ausleseeinheit der Anschalteinheit 100 ausgelesen werden. Die Anwendungselektronik 200 kann insbesondere eingerichtet sein, einen Schrittmotor und/oder einen Servomotor und/oder einen Gleichstrommotor des Werkzeugs 300 anzusteuern. Der erste Motor 321 beziehungsweise der zweite Motor 322 des Greifers 310 können dabei insbesondere als Schrittmotor oder Servomotor oder Gleichstrommotor ausgestaltet sein. Die Unterdruckpumpe 331 des Unterdruckhebers 330 kann insbesondere ein Gleichstrommotor sein. Der Antriebsmotor 342 der Rotationseinheit 340 kann insbesondere ein Schrittmotor oder Servomotor oder Gleichstrommotor sein. Ferner kann die Ansteuerungselektronik 200 eingerichtet sein, einen Spulenstrom für eine Spule des Werkzeugs 300 zu steuern und/oder digitale Ein- und/oder Ausgänge bereitzustellen und/oder analoge Ein- und/oder Ausgänge bereitzustellen und/oder eine Kommunikationsschnittstelle bereitzustellen und/oder eine Schnittstelle für Drehgeber oder Lineargeber bereitzustellen. Insbesondere mittels eines Drehgebers können beispielsweise Drehbewegungen von erstem Motor 321, zweitem Motor 322, Hubmotor 335 und/oder Antriebsmotor 342 erfasst werden, so dass eine genauere Steuerung von erstem Motor 321, zweitem Motor 322, Hubmotor 335 und/oder Antriebsmotor 342 möglich wird.

Ein Beispiel für eines der weiteren Werkzeuge 300 kann ein Behälter sein, der gekippt werden kann. Hierzu kann es vorgesehen sein, dass der Behälter um eine Behälterachse drehbar gelagert ist und mittels einer Gewindestange oder mittels eines Federmechanismus um die Behälterachse gedreht werden kann. Dabei kann der Behälter so ausgestaltet sein, dass Gegenstände innerhalb des Behälters bei einem entsprechenden Kippen des Behälters aus diesem ausgekippt werden. Eine Drehung der Gewindestange oder ein Betätigen des Federmechanismus können dabei wiederum durch die Anwendungselektronik 200 der Anschalteinheit 100 gesteuert werden.

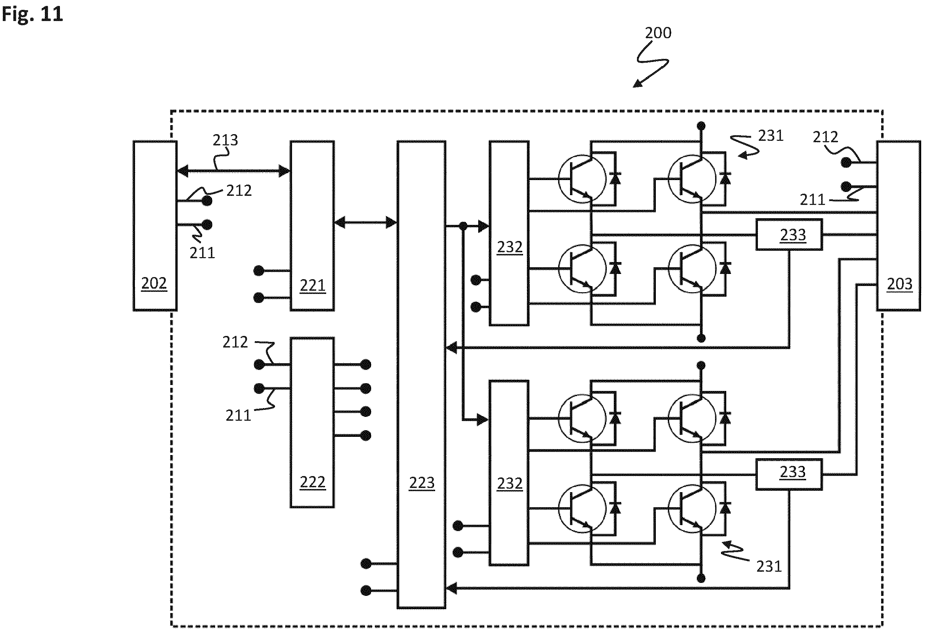

In den Fig. 11 bis 19 sind verschiedene elektrische Schaltungen für Anwendungselektroniken 200 für verschiedene Werkzeuge 300 beziehungsweise für verschiedene Teilelemente von Werkzeugen 300 gezeigt. Insbesondere können mehrere der in den Fig. 11 bis 19 gezeigten Schaltungen zu einer Anwendungselektronik 200 kombiniert werden.

Die Fig. 11 bis 19 zeigen jeweils eine Anwendungselektronik 200. Die Anwendungselektronik weist Anschlüsse 202 auf, mit denen die Anwendungselektronik 200 mit der ersten Platine 120 und damit mit der Spannungsversorgung und der Kommunikationsverbindung verbunden werden kann. Über die Spannungsversorgung kann eine Betriebsspannung 212 bereitgestellt werden, beispielsweise mit einem Potential von vierundzwanzig Volt gegenüber einer Masse 211. Ferner wird eine Datenkommunikation 213 bereitgestellt, mit der Daten von der ersten Platine 120 zu einer Kommunikationsschaltung 221 weitergegeben werden können. Die Datenkommunikation 213 kann dabei eine oder mehrere Datenleitungen umfassen. Ferner weist die Anwendungselektronik 200 eine Spannungsversorgungseinheit 222 auf, mit der verschiedene benötigte Betriebsspannungen bereitgestellt werden können. Die Kommunikationsschaltung 221 ist mit einem Steuerelement 223 verbunden, wobei das Steuerelement 223 beispielsweise einen Microcontroller oder ein Field Programmable Gate Array (FPGA) aufweisen kann.

Dieser Aufbau ist bei allen in den Fig. 11 bis 19 gezeigten beispielhaften Ausgestaltungen der Anwendungselektronik 200 identisch, so dass in der folgenden Beschreibung nicht erneut einzeln darauf eingegangen wird.

Fig. 11 zeigt eine Anwendungselektronik 200, die der Ansteuerung eines Schrittmotors und damit beispielsweise dem ersten Motor 321, dem zweiten Motor 322, dem Hubmotor 335 oder dem Antriebsmotor 342 dient. Zwei Leistungsendstufen 231 bestehend aus jeweils vier npn-Transistoren werden jeweils mittels eines Treibers 232 angesteuert und sind eingerichtet, jeweils eine Induktivität des Schrittmotors über die zweite Schnittstelle 203 anzusteuern. Eine Stromrückführung 233 zum Steuerelement 223 dient der Regelung der Leistungsendstufen 231. Mit der in Fig. 11 gezeigten Anwendungselektronik 200 kann ein Schrittmotor gesteuert werden. Sind mehrere Schrittmotoren vorgesehen, beispielsweise beim Greifer 310 der Fig. 6 bis 8, kann die Anwendungselektronik 200 der Fig. 11 beispielsweise zur Ansteuerung des ersten Motors 321 dienen und der zweite Motor 322 durch eine identisch aufgebaute Schaltung angesteuert werden, die ebenfalls Teil der Ansteuerungselektronik 200 sein kann.

An der zweiten Schnittstelle 203 werden ebenfalls die Betriebsspannung 212 und die Masse 211 bereitgestellt. In einem alternativen, hier nicht gezeigten, Ausführungsbeispiel kann hier auch eine andere Spannung, beispielsweise bereitgestellt durch die Spannungsversorgungseinheit 222, bereitgestellt werden. Auch dies gilt ebenfalls für die folgenden Figuren.

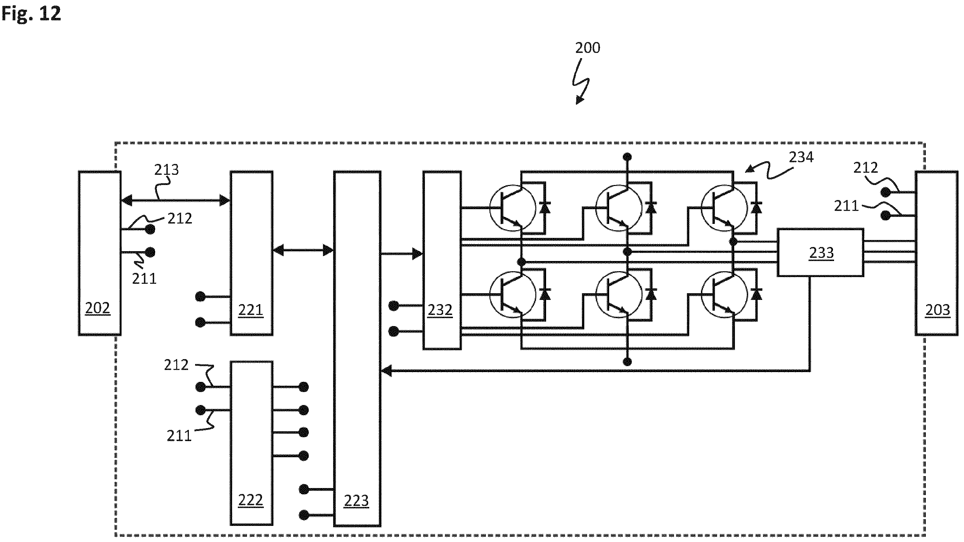

Fig. 12 zeigt eine Anwendungselektronik 200, die der Ansteuerung eines 3-Phasen-Servomotors beziehungsweise eines bürstenlosen Gleichstrommotors und damit beispielsweise dem ersten Motor 321, dem zweiten Motor 322, dem Hubmotor 335 oder dem Antriebsmotor 342 dient. Mittels eines Treibers 232 wird eine Drei-Phasen-Ansteuerung 234 betrieben und mittels der zweiten Schnittstelle 203 an das Werkzeug angeschlossen. In diesem Fall ist ebenfalls eine Stromrückführung 233 vorgesehen, die der Steuerung dient. Die Stromrückführung 233 kann dabei die Ströme aller drei Phasen zum Steuerelement weitergeben. Alternativ kann auch vorgesehen sein, mittels der Stromrückführung 233 zwei Ströme zu messen und einen dritten Strom zu berechnen unter der Annahme dass eine Summe der Ströme Null ergibt.

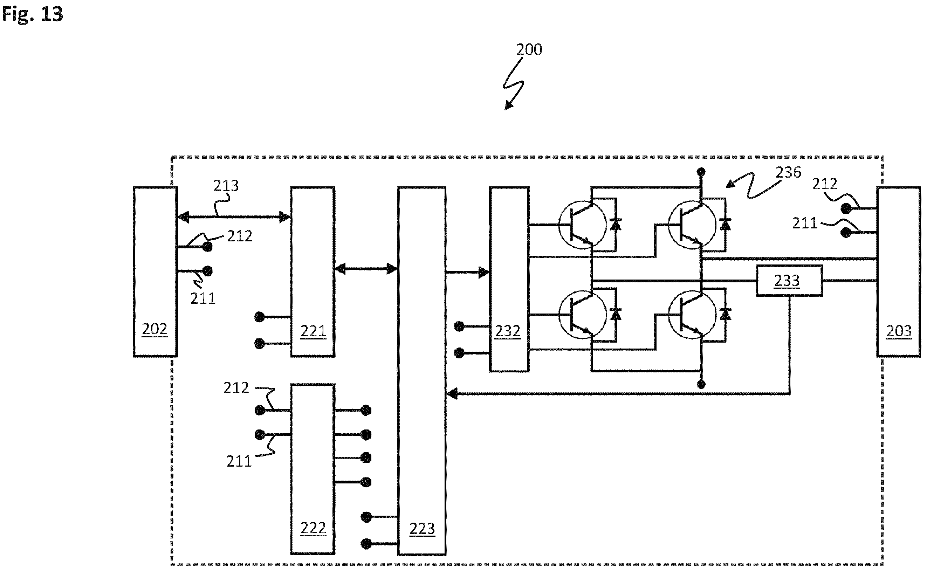

Fig. 13 zeigt eine Anwendungselektronik 200, die der Ansteuerung einer Spule dient. Die Anwendungselektronik weist dabei eine Spulenansteuerung 236 auf, die einer der Leistungsendstufen der Anwendungselektronik 200 der Fig. 11 entspricht. Somit kann eine Induktivität angesteuert werden. Dies ist beispielsweise dann hilfreich, wenn das Werkzeug 300 einen Elektromagneten mit einer Spule umfasst, der angesteuert werden soll.

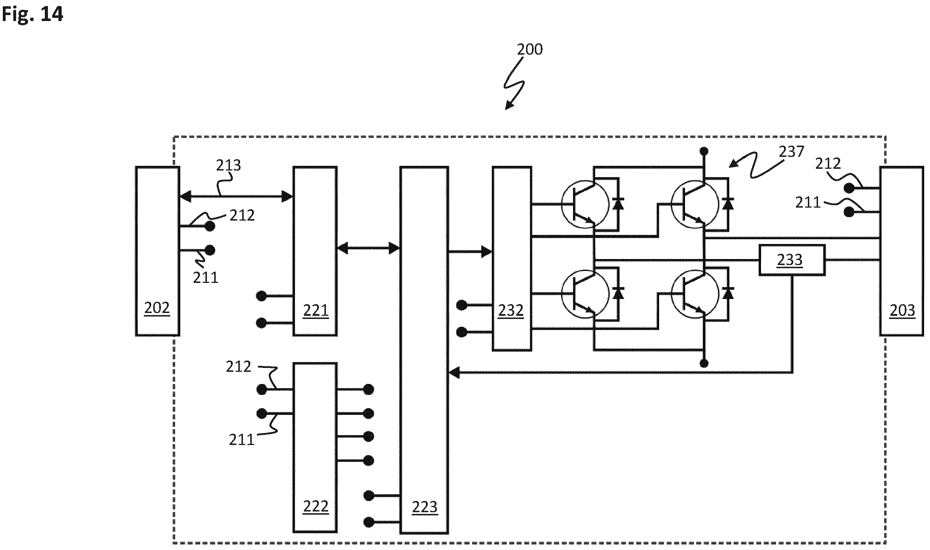

Fig. 14 zeigt eine Anwendungselektronik 200, die der Ansteuerung eines Gleichstrommotors und damit beispielsweise dem ersten Motor 321, dem zweiten Motor 322, dem Hubmotor 335, der Unterdruckpumpe 331 oder dem Antriebsmotor 342 dient. Mittels eines Treibers 232 wird eine Gleichstrommotoransteuerung 237 betrieben, die mittels der zweiten Schnittstelle 203 an den Gleichstrommotor angeschlossen wird. Die Gleichstrommotoransteuerung 237 ist dabei wie die Leistungsendstufe 231 aufgebaut. Ist das Werkzeug 300 beispielsweise der Unterdruckheber 330 der Fig. 9, kann mittels dieser Anwendungselektronik 200 die Unterdruckpumpe 331 betrieben werden, wenn diese einen Gleichstrommotor umfasst. Für den Hubmotor 335 kann zusätzlich eine Schaltung, die zumindest teilweise der Anwendungselektronik 200 der Fig. 11 entspricht, vorgesehen sein. Beide Schaltungen zusammen können zu einer auf der zweiten Platine 201 angeordneten Anwendungselektronik 200 zusammengefasst werden.

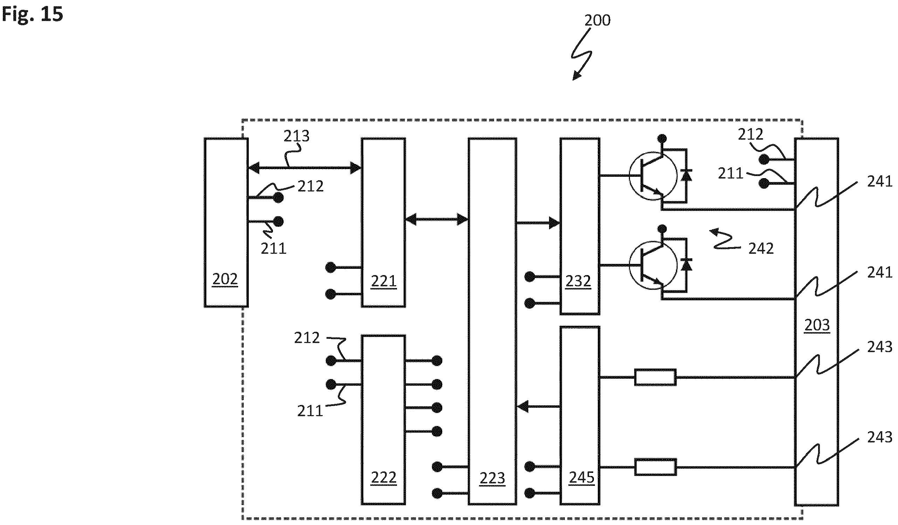

Fig. 15 zeigt eine Anwendungselektronik 200, mit der digitale Signale ausgegeben oder eingelesen werden können. Dazu weist die zweite Schnittstelle 203 digitale Ausgänge 241 auf, die mittels des Treibers 232 und einer Transistorschaltung 242 angesteuert werden können. Außerdem weist die zweite Schnittstelle 203 digitale Eingänge 243 auf, die mittels einer Leseeinheit 245 ausgelesen werden können. Es sind jeweils zwei digitale Ausgänge 241 und zwei digitale Eingänge 243 dargestellt, die Anzahl kann jedoch auch anders sein.

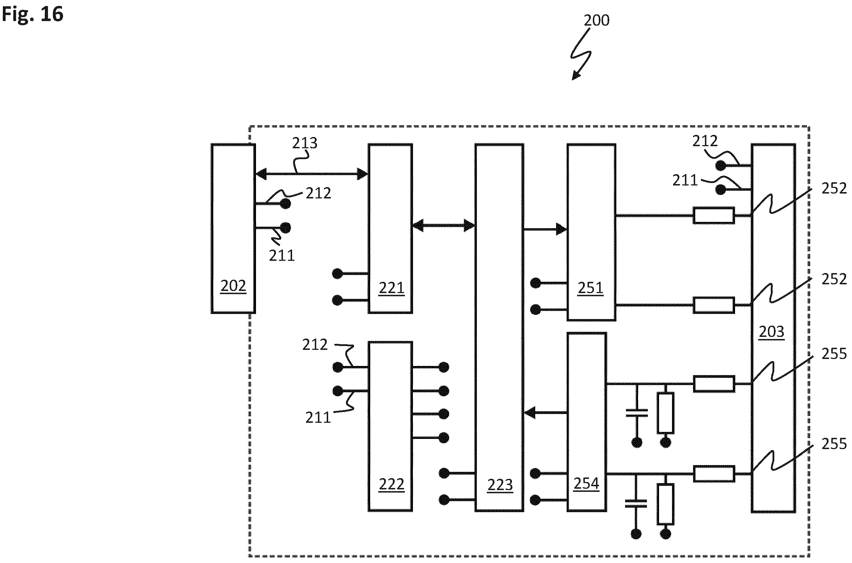

Fig. 16 zeigt Anwendungselektronik 200, mit der analoge Signale ausgegeben oder eingelesen werden können. Dazu weist die zweite Schnittstelle 203 zwei analoge Ausgänge 252 auf, die mit einer Analogausgangsansteuerung 251 angesteuert werden können. Ferner weist die zweite Schnittstelle 203 zwei analoge Eingänge 255 auf, die mittels Analogausleseeinheit 254 ausgelesen werden können. Es sind jeweils zwei analoge Ausgänge 252 und zwei analoge Eingänge 255 dargestellt, die Anzahl kann jedoch auch anders sein.

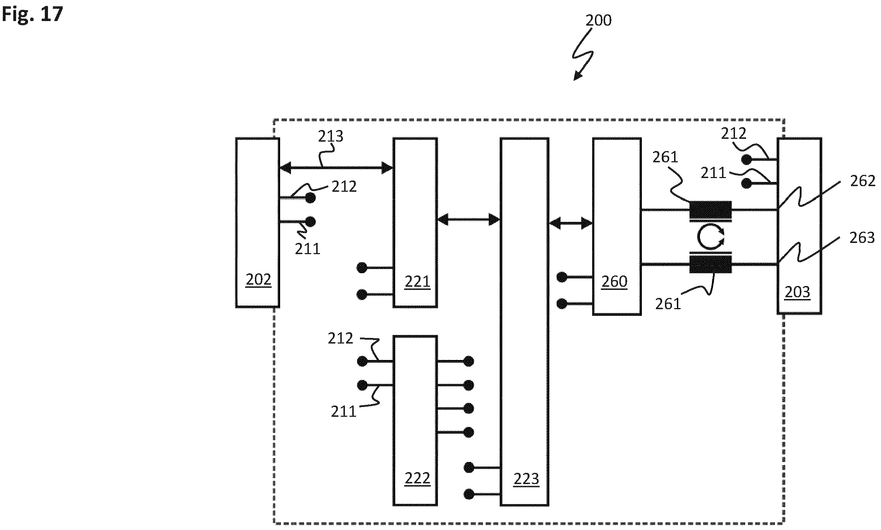

Fig. 17 zeigt eine Anwendungselektronik 200, mit der eine digitale Kommunikation zum Werkzeug 300 möglich ist. Ein Kommunikationsumsetzer 260 ist mittels stromkompensierten Drosseln 261 mit einem TX-Anschluss 262 der zweiten Schnittstelle 203 und einem RX-Anschluss 263 der zweiten Schnittstelle 203 verbunden. Somit kann ein über ein Datenprotokoll definiertes Datensignal über die zweite Schnittstelle 203 an das Werkzeug 300 ausgegeben werden.

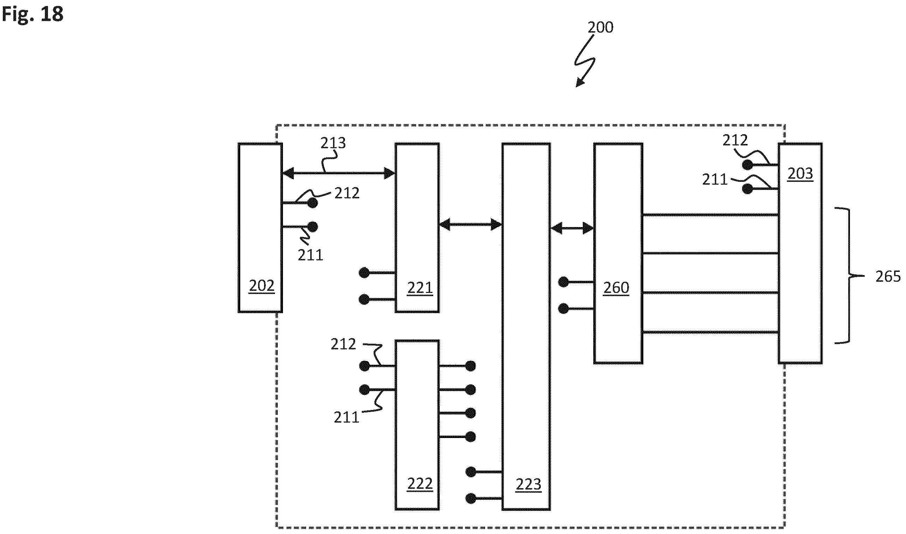

Fig. 18 zeigt eine Anwendungselektronik 200, mit der eine digitale Kommunikation zum Werkzeug 300 möglich ist. Ein Kommunikationsumsetzer 260 ist mit vier Kommunikationsanschlüssen 265 der zweiten Schnittstelle 203 verbunden. Somit kann ein über ein Datenprotokoll definiertes Datensignal über die zweite Schnittstelle 203 an das Werkzeug 300 ausgegeben werden. Die in den Fig. 17 und 18 gezeigten Anwendungselektroniken 200 stellen Alternativen zueinander dar.

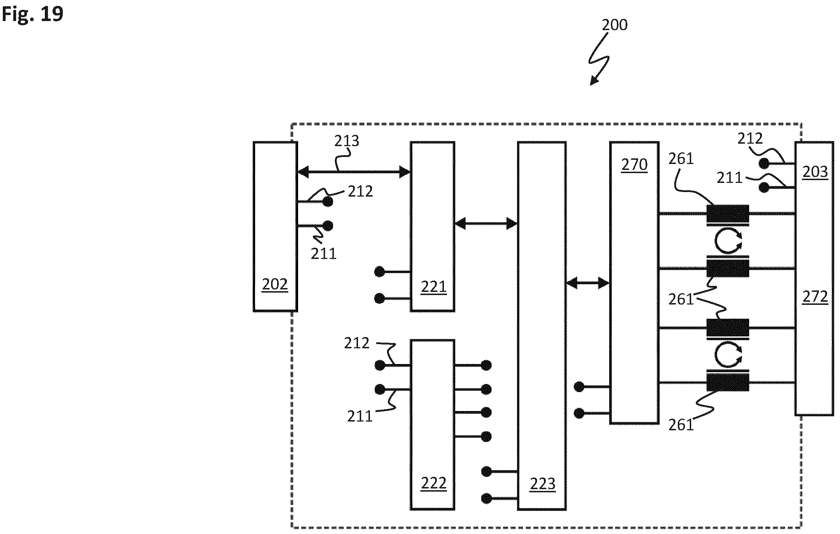

Fig. 19 zeigt eine Anwendungselektronik 200, mit der ein Geber des Werkzeugs 300 ausgelesen werden kann. Ein Geber kann auch als Encoder bezeichnet werden. Eine Encodersteuerung 270 ist mit einer Encoderschnittstelle 272, die Teil der zweiten Schnittstelle 203 ist, über vier stromkompensierte Drosseln 261 verbunden. Mit einer solchen Anwendungselektronik kann ein Encoder, beispielsweise ein Drehgeber oder ein Lineargeber ausgelesen werden. Eine solche Anwendungselektronik 200 kann mit einer der bereits beschriebenen Anwendungselektroniken 200 für Motoren kombiniert werden, um eine Motorposition auszulesen. Die Encodersteuerung 270 kann auch als Encoder-Interface bezeichnet werden.

Weitere, hier nicht gezeigte Anwendungselektroniken 200 sind ebenfalls denkbar.

### Bezugszeichenliste

- 1: lineares Transportsystem
- 2: stationäre Einheit
- 3: Führungsschiene
- 4: Linearmotor
- 5: Stator
- 6: stationäre Antenne
- 7: Energiesendespule
- 8: Kurvenmoduleinheit
- 20: bewegliche Einheit
- 21: Läufer
- 22: Magnet
- 23: Befestigungsmöglichkeit
- 24: Laufrolle
- 25: Rahmen
- 99: Schraube
- 100: Anschalteinheit
- 101: Gehäuse
- 102: erste Erstreckungsrichtung
- 103: zweite Erstreckungsrichtung
- 105: Energieempfangsspule
- 106: ferromagnetischer Kern
- 110: bewegliche Antenne
- 111: Spulenplatine
- 120: erste Platine
- 121: Energieempfangselektronik
- 122: Kommunikationselektronik
- 123: Verbindung
- 124: erste Schnittstelle
- 130: Bauraum
- 140: Recheneinheit
- 141: Speicher
- 142: weiterer Speicher
- 143: interner Speicher
- 144: interner Energiespeicher
- 181: erste Erstreckungsrichtung
- 182: zweite Erstreckungsrichtung
- 183: erster Bereich
- 184: zweiter Bereich
- 190: Öffnung
- 191: Steckelement
- 200: Anwendungselektronik
- 201: zweite Platine
- 202: Anschlüsse
- 203: zweite Schnittstelle
- 211: Masse
- 212: Betriebsspannung
- 213: Datenkommunikation
- 221: Kommunikationsschaltung
- 222: Spannungsversorgungseinheit
- 223: Steuerelement
- 231: Leistungsendstufe
- 232: Treiber
- 233: Stromrückführung
- 234: 3-Phasen-Ansteuerung
- 236: Spulenansteuerung
- 237: Gleichstrommotoransteuerung
- 241: digitaler Ausgang
- 243: digitaler Eingang
- 245: Leseeinheit
- 251: Analogausgangsansteuerung
- 252: analoger Ausgang
- 254: Analogausleseeinheit
- 255: analoger Eingang
- 260: Kommunikationsumsetzer
- 261: stromkompensierte Drossel
- 262: Tx-Anschluss
- 263: Rx-Anschluss
- 265: Kommunikationsanschlüsse
- 270: Encodersteuerung
- 272: Encoderschnittstelle
- 300: Werkzeug
- 301: Stecker
- 302: Kabel
- 310: Greifer
- 311: erste Greiferschale
- 312: zweite Greiferschale
- 313: erster Bewegungswandler
- 314: zweiter Bewegungswandler
- 315: erste Achsstange
- 316: zweite Achsstange
- 317: Greiferrahmen
- 321: erster Motor
- 322: zweiter Motor
- 323: konischer Körper
- 324: Gewindestange
- 325: Hebeeinheit
- 330: Unterdruckheber
- 331: Unterdruckpumpe
- 332: Saugeinheit
- 333: Schlauch
- 334: Halter
- 335: Hubmotor
- 336: Gewindestange
- 337: Stange
- 338: Heberrahmen
- 340: Rotationseinheit
- 341: Montageplatte
- 342: Antriebsmotor
- 343: erstes Zahnrad
- 344: zweites Zahnrad
- 345: Drehteller
- 346: Produkt

## Patentansprüche

1. Anschalteinheit (100) für ein Werkzeug (300) einer beweglichen Einheit (20) eines linearen Transportsystems (1), wobei die Anschalteinheit (100) an der beweglichen Einheit (20) befestigbar ist, wobei die Anschalteinheit (100) ein Gehäuse (101) aufweist, wobei die Anschalteinheit (100) eine Energieempfangsspule (105) mit einer Energieempfangselektronik (121) sowie eine bewegliche Antenne (110) mit einer Kommunikationselektronik (122) aufweist, wobei die Energieempfangselektronik (121) und die Kommunikationselektronik (122) auf zumindest einer ersten Platine (120) innerhalb des Gehäuses (101) angeordnet sind, wobei das Gehäuse (101) eine Öffnung (190) für Anschlüsse des Werkzeugs (300) aufweist, wobei das Gehäuse (101) einen Bauraum (130) für eine Anwendungselektronik (200) aufweist, wobei die erste Platine (120) eine erste Schnittstelle (124) für die Anwendungselektronik (200) mit einer Spannungsversorgung und einer Kommunikationsverbindung aufweist, wobei die Kommunikationselektronik (122) eingerichtet ist, ein erstes Datensignal über die bewegliche Antenne (110) zu empfangen, aus einer Information über eine Datenstruktur des ersten Datensignals und dem ersten Datensignal ein zweites Datensignal zu berechnen und das zweites Datensignal an der Kommunikationsverbindung zur Verfügung zu stellen, wobei die Anschalteinheit (100) ferner einen Speicher (141) aufweist, wobei der Speicher (141) groß genug ist um eine Firmware der Anschalteinheit (100) zu speichern und wobei die Anschalteinheit (100) eingerichtet ist, ein Datenpaket zu empfangen, wobei die Anschalteinheit (100) eingerichtet ist, bei Empfang des Datenpakets eine Firmwareaktualisierung der Anschalteinheit (100) durchzuführen, wobei eine Recheneinheit (140) der Anschalteinheit (100) für die Durchführung der Firmwareaktualisierung einen speziellen Bootloader beinhaltet, wobei der Bootloader in der Lage ist, die Firmware aus dem Speicher (141) zu lesen und anschließend die Firmware der Recheneinheit (140) zu überschreiben, wobei die Anschalteinheit (100) eingerichtet ist, nach Empfangen des Datenpaketes, welches einen Prozess der Firmwareaktualisierung einleitet, zunächst die Firmware komplett zu empfangen, wobei hierzu entsprechend viele Datenpakete für die Übertragung der Firmware empfangen werden und nachdem die Anschalteinheit (100) alle Datenpakete für die Firmware empfangen und diese vollständig in einen internen Speicher übernommen hat, die Anschalteinheit (100) eingerichtet ist, zu prüfen, ob in einem internen Energiespeicher (144) genug Energie zur Verfügung steht, so dass die Firmwareaktualisierung unterbrechungsfrei vorgenommen werden kann, wobei die Anschalteinheit eingerichtet ist, anschließend ihren Bootloader in einen entsprechenden Modus um die Firmwareaktualisierung durchzuführen zu versetzen und eingerichtet ist, sich anschließend neu zu starten, wobei der Bootloader eingerichtet ist, den Aktualisierungsprozess zu übernehmen und die Recheneinheit (140) nach der Aktualisierung neu zu starten.

2. Anschalteinheit (100) nach Anspruch 1, wobei die Anschalteinheit (100) eingerichtet ist, anhand der Datenstruktur einen Empfang des ersten Datensignals zu steuern und anhand der Datenstruktur die für eine Weitergabe an das Werkzeug (300) notwendigen zweiten Daten zu berechnen.

3. Anschalteinheit (100) nach Anspruch 1 oder 2, wobei eine Anwendungselektronik (200) im Bauraum (130) angeordnet ist, wobei die Anwendungselektronik (200) Anschlüsse (202) zum Anschluss der Anwendungselektronik (200) an die erste Schnittstelle (124) aufweist, wobei die Anwendungselektronik (200) eine zweite Schnittstelle (203) für einen Werkzeuganschluss aufweist, wobei die zweite Schnittstelle in der Öffnung (190) des Gehäuses (101) angeordnet ist.

4. Anschalteinheit (100) nach Anspruch 3, wobei die Anwendungselektronik (200) eingerichtet ist, das zweite Datensignal zu verarbeiten und zumindest eine Spannung und/oder Daten an der zweiten Schnittstelle (203) anhand des zweiten Datensignals bereitzustellen und/oder Daten an der zweiten Schnittstelle (203) anhand des zweiten Datensignals auszulesen.

5. Anschalteinheit (100) nach Anspruch 3 oder 4, wobei die Anwendungselektronik (200) auf zumindest einer zweiten Platine (201) angeordnet ist.

6. Anschalteinheit (100) nach einem der Ansprüche 3 bis 5, wobei die zweite Schnittstelle (203) ein Steckelement (191) aufweist, wobei das Steckelement (191) die Öffnung (190) dicht verschließt.

7. Anschalteinheit (100) nach Anspruch 6, wobei das Gehäuse (101) mit einer aushärtenden Flüssigkeit vergossen ist.

8. Anschalteinheit (100) nach einem der Ansprüche 3 bis 7, wobei die Anwendungselektronik (200) eingerichtet ist, einen Schrittmotor und/oder einen Servomotor und/oder einen Gleichstrommotor des Werkzeugs (300) anzusteuern und/oder einen Spulenstrom für eine Spule des Werkzeugs (300) zu steuern und/oder digitale Ein- und/oder Ausgänge bereitzustellen und/oder analoge Ein- und/oder Ausgänge bereitzustellen und/oder eine Kommunikationsschnittstelle bereitzustellen und/oder eine Schnittstelle für Drehgeber oder Lineargeber bereitzustellen.

9. Anschalteinheit (100) nach einem der Ansprüche 1 bis 8, wobei die Energieempfangselektronik (121) eingerichtet ist, eine über die Energieempfangsspule (105) aufgenommene Wechselspannung in eine über die Spannungsversorgung bereitgestellte Gleichspannung zu wandeln.

10. Anschalteinheit (100) nach einem der Ansprüche 1 bis 9, wobei das Gehäuse (101) in einer ersten Erstreckungsrichtung (181) größer ist als in einer zweiten Erstreckungsrichtung (182), wobei das Gehäuse (101) einen ersten Bereich (183) und einen zweiten Bereich (184) aufweist, wobei das Gehäuse (101) im ersten Bereich (183) in der zweiten Erstreckungsrichtung (182) größer ist als im zweiten Bereich (184), wobei die die Energieempfangsspule (105) und die bewegliche Antenne (110) im ersten Bereich (183) angeordnet sind, wobei die zumindest eine erste Platine (120) und der Bauraum (130) sich über den ersten Bereich (183) und den zweiten Bereich (184) erstrecken.

11. Anschalteinheit (100) nach einem der Ansprüche 1 bis 10, ferner aufweisend einen weiteren Speicher (142), wobei der weitere Speicher (142) groß genug ist um eine Firmware der Anwendungselektronik (200) zu speichern und wobei die Anschalteinheit (100) eingerichtet ist, ein weiteres Datenpaket zu empfangen, wobei die Anschalteinheit (100) eingerichtet ist, bei Empfang des weiteren Datenpakets eine Firmwareaktualisierung der Anwendungselektronik (200) durchzuführen.

12. Anschalteinheit (100) nach einem der Ansprüche 1 bis 11, wobei die Anschalteinheit (100) dazu eingerichtet ist, die Firmware der Anschalteinheit (100) oder der Anwendungselektronik (200) in einen internen Speicher (143) zu speichern, und wobei die Anschalteinheit (100) dazu eingerichtet ist, die empfangene Firmware anschließend auf Gültigkeit zu prüfen.

13. Bewegliche Einheit eines linearen Transportsystems (1) mit einer Anschalteinheit (100) nach einem der Ansprüche 1 bis 12 und einer Befestigungsmöglichkeit (23) für ein Werkzeug (300), wobei die bewegliche Einheit (20) Laufrollen (24) aufweist, wobei die Laufrollen (24) auf einer Führungsschiene (3) des linearen Transportsystems (1) abrollen können, wobei die bewegliche Einheit (20) einen Rahmen (25) aufweist, wobei die Laufrollen (24) am Rahmen (25) angeordnet sind, wobei die Anschalteinheit (100) am Rahmen (25) befestigt ist und wobei die Befestigungsmöglichkeit (23) am Rahmen (25) angeordnet ist.

14. Bewegliche Einheit nach Anspruch 13, wobei ein Werkzeug (300) an der Befestigungsmöglichkeit (23) befestigt ist und wobei das Werkzeug (300) mit der Anschalteinheit (100) verbunden ist.

15. Lineares Transportsystem (1) mit einer beweglichen Einheit (20) nach Anspruch 13 oder 14, wobei das lineare Transportsystem (1) eine Führungsschiene (3) zum Führen der beweglichen Einheit (20), mehrere stationäre Einheiten (2) sowie einen Linearmotor (4) zum Antreiben der beweglichen Einheit (20) entlang der Führungsschiene (3) aufweist, wobei der Linearmotor (4) einen Stator (5) und einen Läufer (21) umfasst, wobei der Stator (5) die stationären Einheiten (2) umfasst, welche jeweils eine oder mehrere Antriebsspulen umfassen, wobei der Läufer (21) an der beweglichen Einheit (20) angeordnet ist und einen oder mehrere Magnete (22) umfasst, wobei zumindest einige der stationären Einheiten (2) jeweils eine oder mehrere Energiesendespulen (7) und eine oder mehrere stationäre Antennen (6) umfassen.

## Claims

1. Switch-on unit (100) for a tool (300) of a mobile unit (20) of a linear transport system (1), wherein the switch-on unit (100) is able to be fastened to the mobile unit (20), wherein the switch-on unit (100) has a housing (101), wherein the switch-on unit (100) has an energy reception coil (105) having energy reception electronics (121) and also has a mobile antenna (110) having communication electronics (122), wherein the energy reception electronics (121) and the communication electronics (122) are arranged on at least one first circuit board (120) inside the housing (101), wherein the housing (101) has an opening (190) for connections of the tool (300), wherein the housing (101) has an installation space (130) for application electronics (200), wherein the first circuit board (120) has a first interface (124) for the application electronics (200) having a voltage supply and a communication connection, wherein the communication electronics (122) are configured to receive a first data signal via the mobile antenna (110), to compute a second data signal from information about a data structure of the first data signal and from the first data signal and to provide the second data signal at the communication connection, wherein the switch-on unit (100) furthermore has a memory (141), wherein the memory (141) is large enough to store firmware of the switch-on unit (100) and wherein the switch-on unit (100) is configured to receive a data packet, wherein the switch-on unit (100) is configured, upon receipt of the data packet, to perform a firmware update for the switch-on unit (100), wherein a computing unit (140) of the switch-on unit (100) has a special bootloader for performing the firmware update, wherein the bootloader is capable of reading the firmware from the memory (141) and then overwriting the firmware of the computing unit (140), wherein the switch-on unit (100) is configured, following receipt of the data packet, which initiates a process of the firmware update, to first receive the firmware completely, wherein for this purpose a correspondingly large number of data packets for the transmission of the firmware are received and after the switch-on unit (100) has received all data packets for the firmware and has incorporated them completely into an internal memory, the switch-on unit (100) is configured to check whether there is enough energy available in an internal energy storage unit (144) for the firmware update to be able to be performed without interruption, wherein the switch-on unit is configured to then put its bootloader into a corresponding mode in order to perform the firmware update and is configured to then restart, wherein the bootloader is configured to take over the update process and to restart the computing unit (140) following the update.

2. Switch-on unit (100) according to Claim 1, wherein the switch-on unit (100) is configured to control receipt of the first data signal based on the data structure and to compute the second data requiring forwarding to the tool (300) based on the data structure.

3. Switch-on unit (100) according to Claim 1 or 2, wherein application electronics (200) are arranged in the installation space (130), wherein the application electronics (200) have connections (202) for connecting the application electronics (200) to the first interface (124), wherein the application electronics (200) have a second interface (203) for a tool connection, wherein the second interface is arranged in the opening (190) in the housing (101).

4. Switch-on unit (100) according to Claim 3, wherein the application electronics (200) are configured to process the second data signal and to provide at least one voltage and/or data at the second interface (203) based on the second data signal and/or to read out data at the second interface (203) based on the second data signal.

5. Switch-on unit (100) according to Claim 3 or 4, wherein the application electronics (200) are arranged on at least one second circuit board (201).

6. Switch-on unit (100) according to one of Claims 3 to 5, wherein the second interface (203) has a plug element (191), wherein the plug element (191) closes the opening (190) in a sealtight manner.

7. Switch-on unit (100) according to Claim 6, wherein the housing (101) is cast in a hardening fluid.

8. Switch-on unit (100) according to one of Claims 3 to 7, wherein the application electronics (200) are configured to drive a stepper motor and/or a servomotor and/or a DC motor of the tool (300) and/or to control a coil current for a coil of the tool (300) and/or to provide digital inputs and/or outputs and/or to provide analogue inputs and/or outputs and/or to provide a communication interface and/or to provide an interface for rotary encoders or linear encoders.

9. Switch-on unit (100) according to one of Claims 1 to 8, wherein the energy reception electronics (121) are configured to convert an AC voltage received via the energy reception coil (105) into a DC voltage able to be provided via the voltage supply.

10. Switch-on unit (100) according to one of Claims 1 to 9, wherein the housing (101) is larger in a first direction of extent (181) than in a second direction of extent (182), wherein the housing (101) has a first region (183) and a second region (184), wherein the housing (101) is larger in the second direction of extent (182) in the first region (183) than in the second region (184), wherein the energy reception coil (105) and the mobile antenna (110) are arranged in the first region (183), wherein the at least one first circuit board (120) and the installation space (130) extend over the first region (183) and the second region (184).

11. Switch-on unit (100) according to one of Claims 1 to 10, furthermore having a further memory (142), wherein the further memory (142) is large enough to store firmware of the application electronics (200) and wherein the switch-on unit (100) is configured to receive a further data packet, wherein the switch-on unit (100) is configured, upon receipt of the further data packet, to perform a firmware update for the application electronics (200) .

12. Switch-on unit (100) according to one of Claims 1 to 11, wherein the switch-on unit (100) is configured to store the firmware of the switch-on unit (100) or of the application electronics (200) in an internal memory (143), and wherein the switch-on unit (100) is configured to then check the validity of the received firmware.

13. Mobile unit of a linear transport system (1) having a switch-on unit (100) according to one of Claims 1 to 12 and a fastening option (23) for a tool (300), wherein the mobile unit (20) has rollers (24), wherein the rollers (24) are able to roll along a guide rail (3) of the linear transport system (1), wherein the mobile unit (20) has a frame (25), wherein the rollers (24) are arranged on the frame (25), wherein the switch-on unit (100) is fastened to the frame (25) and wherein the fastening option (23) is arranged on the frame (25).

14. Mobile unit according to Claim 13, wherein a tool (300) is fastened to the fastening option (23) and wherein the tool (300) is connected to the switch-on unit (100) .

15. Linear transport system (1) having a mobile unit (20) according to Claim 13 or 14, wherein the linear transport system (1) has a guide rail (3) for guiding the mobile unit (20), multiple stationary units (2) and a linear motor (4) for driving the mobile unit (20) along the guide rail (3), wherein the linear motor (4) comprises a stator (5) and a rotor (21), wherein the stator (5) comprises the stationary units (2), which each comprise one or more drive coils, wherein the rotor (21) is arranged on the mobile unit (20) and comprises one or more magnets (22), wherein at least some of the stationary units (2) each comprise one or more energy transmission coils (7) and one or more stationary antennas (6).

## Revendications

1. Unité de mise en marche (100) pour un outil (300) d'une unité mobile (20) d'un système de transport (1) linéaire, l'unité de mise en marche (100) pouvant être fixée à l'unité mobile (20), l'unité de mise en marche (100) possédant un boîtier (101), l'unité de mise en marche (100) possédant une bobine de réception d'énergie (105) pourvue d'une électronique de réception d'énergie (121) ainsi qu'une antenne mobile (110) pourvue d'une électronique de communication (122), l'électronique de réception d'énergie (121) et l'électronique de communication (122) étant disposées sur au moins une première platine (120) à l'intérieur du boîtier (101), le boîtier (101) possédant une ouverture (190) pour des bornes de l'outil (300), le boîtier (101) possédant un espace de montage (130) pour une électronique d'application (200), la première platine (120) possédant une première interface (124) pour l'électronique d'application (200) avec une alimentation électrique et une liaison de communication, l'électronique de communication (122) étant conçue pour recevoir un premier signal de données par le biais de l'antenne mobile (110), calculer un deuxième signal de données à partir d'une information à propos d'une structure de données du premier signal de données et du premier signal de données et mettre le deuxième signal de données à la disposition de la liaison de communication, l'unité de mise en marche (100) possédant en outre une mémoire (141), la mémoire (141) étant suffisamment grande pour enregistrer un microprogramme de l'unité de mise en marche (100) et l'unité de mise en marche (100) étant conçue pour recevoir un paquet de données, l'unité de mise en marche (100) étant conçue pour, lors de la réception du paquet de données, réaliser une actualisation du microprogramme de l'unité de mise en marche (100), une unité de calcul (140) de l'unité de mise en marche (100) contenant un chargeur d'amorçage spécial pour la réalisation de l'actualisation du microprogramme, le chargeur d'amorçage étant en mesure de lire le microprogramme depuis la mémoire (141) et ensuite remplacer le microprogramme de l'unité de calcul (140), l'unité de mise en marche (100) étant conçue pour, après la réception du paquet de données qui initie un processus d'actualisation du microprogramme, tout d'abord recevoir entièrement le microprogramme, un nombre correspondant de paquets de données étant reçus à cet effet pour la transmission du microprogramme et après que l'unité de mise en marche (100) a reçu tous les paquets de données pour le microprogramme et les a pris en charge entièrement dans une mémoire interne, l'unité de mise en marche (100) est conçue pour vérifier si suffisamment d'énergie est disponible dans un accumulateur d'énergie interne (144) pour que l'actualisation du microprogramme puisse être effectuée sans interruption, l'unité de mise en marche étant configurée pour mettre ensuite son chargeur d'amorçage dans un mode correspondant afin d'effectuer l'actualisation du microprogramme et étant conçue pour ensuite redémarrer, le chargeur d'amorçage étant conçu pour prendre en charge le processus d'actualisation et redémarrer l'unité de calcul (140) après l'actualisation.

2. Unité de mise en marche (100) selon la revendication 1, l'unité de mise en marche (100) étant conçue pour commander, à l'aide de la structure de données, une réception du premier signal de données et calculer, à l'aide de la structure de données, les deuxièmes données nécessaires pour un transfert à l'outil (300) .

3. Unité de mise en marche (100) selon la revendication 1 ou 2, une électronique d'application (200) étant disposée dans l'espace de montage (130), l'électronique d'application (200) possédant des bornes (202) servant au raccordement de l'électronique d'application (200) à la première interface (124), l'électronique d'application (200) possédant une deuxième interface (203) pour une borne d'outil, la deuxième interface étant disposée dans l'ouverture (190) du boîtier (101).

4. Unité de mise en marche (100) selon la revendication 3, l'électronique d'application (200) étant conçue pour traiter le deuxième signal de données et fournir au moins une tension et/ou des données à la deuxième interface (203) à l'aide du deuxième signal de données et/ou lire des données au niveau de la deuxième interface (203) à l'aide du deuxième signal de données.

5. Unité de mise en marche (100) selon la revendication 3 ou 4, l'électronique d'application (200) étant disposée sur au moins une deuxième platine (201).

6. Unité de mise en marche (100) selon l'une des revendications 3 à 5, la deuxième interface (203) possédant un élément à enficher (191), l'élément à enficher (191) fermant hermétiquement l'ouverture (190).

7. Unité de mise en marche (100) selon la revendication 6, le boîtier (101) étant moulé avec un liquide durcissant.

8. Unité de mise en marche (100) selon l'une des revendications 3 à 7, l'électronique d'application (200) étant conçue pour commander un moteur pas à pas et/ou un servomoteur et/ou un moteur à courant continu de l'outil (300) et/ou commander un courant de bobine pour une bobine de l'outil (300) et/ou fournir des entrées et/ou sorties logiques et/ou fournir des entrées et/ou sorties analogiques et/ou fournir une interface de communication et/ou fournir une interface pour un codeur rotatif ou un codeur linéaire.

9. Unité de mise en marche (100) selon l'une des revendications 1 à 8, l'électronique de réception d'énergie (121) étant conçue pour convertir une tension alternative réceptionnée par le biais de la bobine de réception d'énergie (105) en une tension continue fournie par le biais de l'alimentation électrique.

10. Unité de mise en marche (100) selon l'une des revendications 1 à 9, le boîtier (101) dans une première direction d'extension (181) étant plus grand que dans une deuxième direction d'extension (182), le boîtier (101) possédant une première zone (183) et une deuxième zone (184), le boîtier (101) dans la première zone (183) étant plus grand dans la deuxième direction d'extension (182) que dans la deuxième zone (184), la bobine de réception d'énergie (105) et l'antenne mobile (110) étant disposées dans la première zone (183), l'au moins une première platine (120) et l'espace de montage (130) s'étendant sur la première zone (183) et la deuxième zone (184).

11. Unité de mise en marche (100) selon l'une des revendications 1 à 10, possédant en outre une mémoire supplémentaire (142), la mémoire supplémentaire (142) étant suffisamment grande pour enregistrer un microprogramme de l'électronique d'application (200) et l'unité de mise en marche (100) étant conçue pour recevoir un paquet de données supplémentaire, l'unité de mise en marche (100) étant conçue pour, lors de la réception du paquet de données supplémentaire, effectuer une actualisation du microprogramme de l'électronique d'application (200).

12. Unité de mise en marche (100) selon l'une des revendications 1 à 11, l'unité de mise en marche (100) étant conçue pour enregistrer le microprogramme de l'unité de mise en marche (100) ou de l'électronique d'application (200) dans une mémoire interne (143), et l'unité de mise en marche (100) étant conçue pour vérifier ensuite la validité du microprogramme reçu.

13. Unité mobile d'un système de transport linéaire (1) comprenant une unité de mise en marche (100) selon l'une des revendications 1 à 12 et une possibilité de fixation (23) pour un outil (300), l'unité mobile (20) possédant des galets de roulement (24), les galets de roulement (24) pouvant rouler sur un rail de guidage (3) du système de transport linéaire (1), l'unité mobile (20) possédant un cadre (25), les galets de roulement (24) étant disposés sur le cadre (25), l'unité de mise en marche (100) étant fixée au cadre (25) et la possibilité de fixation (23) étant disposée sur le cadre (25).

14. Unité mobile selon la revendication 13, un outil (300) étant fixé à la possibilité de fixation (23) et l'outil (300) étant connecté à l'unité de mise en marche (100) .

15. Système de transport linéaire (1) comprenant une unité mobile (20) selon la revendication 13 ou 14, le système de transport linéaire (1) possédant un rail de guidage (3) servant à guider l'unité mobile (20), plusieurs unités fixes (2) ainsi qu'un moteur linéaire (4) servant à entraîner l'unité mobile (20) le long du rail de guidage (3), le moteur linéaire (4) comportant un stator (5) et un rotor (21), le stator (5) comportant les unités fixes (2), lesquelles comprennent respectivement une ou plusieurs bobines d'entraînement, le rotor (21) étant disposé sur l'unité mobile (20) et comportant un ou plusieurs aimants (22), au moins quelques-unes des unités fixes (2) comportant respectivement une ou plusieurs bobines d'émission d'énergie (7) et une ou plusieurs antennes fixes (6).
